(19) **Europäisches Patentamt / European Patent Office / Office européen des brevets**

(11) **EP 2 988 261 A1**

(12) **EUROPEAN PATENT APPLICATION**
published in accordance with Art. 153(4) EPC

(43) Date of publication:
**24.02.2016 Bulletin 2016/08**

(51) Int Cl.:
*G06Q 30/02* (2012.01)    *G06F 17/30* (2006.01)

(21) Application number: **14785584.5**

(86) International application number:
**PCT/JP2014/060265**

(22) Date of filing: **09.04.2014**

(87) International publication number:
**WO 2014/171373 (23.10.2014 Gazette 2014/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.04.2013   JP 2013086234**

(71) Applicant: **Sony Corporation**
**Tokyo 108-0075 (JP)**

(72) Inventors:
• **TAKAMURA Seiichi**
  **Tokyo 108-0075 (JP)**
• **YAMAMOTO Noriyuki**
  **Tokyo 108-0075 (JP)**
• **ASANO Yasuharu**
  **Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE, INFORMATION PROCESSING METHOD, AND PROGRAM**

(57)   The present technology relates to an information processing apparatus, an information processing method and a program that enable information related to an event to be presented to each user at an appropriate timing. A server includes: a rule setting unit which sets a rule for setting a presentation timing for presenting event information related to each event for each user; a presentation timing setting unit which sets the presentation timing of the event information for each user based on the set rule; and a presentation control unit which performs a control in a manner that the event information is presented to each user at the set presentation timing. The present technology can be applied to a server that presents event information, for example.

**FIG. 2**

## Description

Technical Field

The present technology relates to an information processing apparatus, an information processing method and a program, and specifically relates to an information processing apparatus, an information processing method and a program to be suitably used in the case where information related to an event is presented to a user.

Background Art

In recent years, development of technology for recommending content appropriate for a user has been active. For example, technology has been proposed which recommends content appropriate for a user, based on a context at the time of an operation of the user (for example, refer to Patent Literature 1).

Further, there are events such as a live performance, an exhibition, a tour trip or a bargain sale in one content to be recommended to a user. Also, for example, technology has been proposed which receives position information from a mobile communication terminal, and delivers event information to the mobile communication terminal, which is within a prescribed range from an execution location of an event, and has an acquisition date of the position information prior to an execution date of the event (for example, refer to Patent Literature 2).

Citation List

Patent Literature

Patent Literature 1:    JP 2005-267483A
Patent Literature 2:    JP 2009-71499A

Summary of Invention

Technical Problem

Incidentally, there are individual variations in the timing at which an intention of participation in an event is decided (for example, the timing at which a ticket of an event is purchased or the like). For example, there will be users with a tendency to systematically decide an intention of participation a considerable time prior to a holding date, and there will be users with a tendency to decide an intention of participation immediately before being held.

Therefore, in the technology of related art, event information is presented at an approximately same timing for all users, by a simultaneous delivery of an email or the like, without considering the tendency of such users.

Accordingly, the present technology can present information related to an event to each user at an appropriate timing.

Solution to Problem

An information processing apparatus according to a first aspect of the present technology includes: a rule setting unit which sets a rule for setting a presentation timing for presenting event information related to each event for each user; a presentation timing setting unit which sets the presentation timing of the event information for each user based on the set rule; and a presentation control unit which performs a control in a manner that the event information is presented to each user at the set presentation timing.

The rule may be a predetermined rule, or may be a rule created by the rule setting unit through learning an intention decision timing at which an intention of participation in an event of each user is decided

The rule setting unit may create the rule through learning a relationship between the presentation timing and the intention decision timing of each user.

The rule setting unit may create the rule through learning a probability model of the intention decision timing.

The presentation timing setting unit may set a presentation frequency of the event information for each user based on a number of peaks of the probability model.

The rule setting unit may collect learning data of a plurality of users with a similar tendency of the intention decision timing, and learn the intention decision timing of the plurality of users.

A user response detection unit which detects at least one or more of a timing at which an event is acknowledged, a timing at which an intention of participation in an event is decided, and participation in an event, as a response for each event of each user, may be further provided, and the rule setting unit may learn the intention decision timing based on a detection result of a response for each event of each user.

In a case where there has been a request of a presentation of the event information from a user, the presentation timing setting unit may set the presentation timing of the event information of each event for the user, and the presentation control unit may perform a control in a manner that the event information is presented to the user with the set presentation timing within a prescribed range from a present date.

The rule setting unit may classify events into a plurality of groups, and set the rule for each of the groups, and the presentation timing setting unit may set the presentation timing of the event information of an event to be targeted for each user based on the rule for a group to which the event to be targeted belongs.

The rule setting unit may classify events into a plurality of the groups for each user based on a preference degree of each user for an event.

A context detection unit which detects a context of each user may be further provided, and the presentation timing setting unit may adjust the presentation timing for each user based on the detected context of each user.

The rule setting unit may set the rule different for cases where a user has not acknowledged and has acknowledged a corresponding event prior to presenting the event information, and the presentation timing setting unit may set the presentation timing based on the rule different in an event not acknowledged and an event acknowledged by a user.

The rule setting unit may additionally set the rule for each method acknowledging a corresponding event prior to presenting the event information, and in a case where a user acknowledges a corresponding event prior to presenting the event information, the presentation timing setting unit may set the presentation timing based on the rule corresponding to a method acknowledging the event.

The presentation timing setting unit may change a presentation timing of the event information based on a remaining number of a seating capacity of an event.

The presentation timing setting unit may set the presentation timing on the basis of at least one or more of a timing at which a time period capable of deciding an intention of participation in an event is started, a timing at which the time period is ended, and a timing at which the event is held.

The presentation control unit may perform a control in a manner that the event information is presented in another information processing apparatus used by each user.

An information processing method according to a first aspect of the present technology, executed by an information processing apparatus which controls a presentation to a user of event information related to each event, includes the steps of: setting a rule for setting a presentation timing for presenting the event information for each user; setting a presentation timing for presenting the event information for each user based on the set rule; and performing a control in a manner that the event information is presented to each user at the set presentation timing.

A program according to a first aspect of the present technology causes a computer to execute a process including the steps of: setting a rule in order for setting a presentation timing for presenting event information related to each event for each user; setting a presentation timing for presenting event information related to each event for each user based on the set rule; and performing a control in a manner that the event information is presented to each user at the set presentation timing.

An information processing apparatus according to a second aspect of the present technology includes: a reception unit which receives a rule for setting a presentation timing for presenting event information related to each event to a user, and the event information, from another information processing apparatus; a presentation timing setting unit which sets a presentation timing for presenting the received event information based on the received rule; and a presentation control unit which performs a control in a manner that the event information is presented at the set presentation timing.

A user response detection unit which detects a response of the user for each event; and a transmission unit which transmits user response information to the another information processing apparatus, the user response information being information which shows a detected response of the user and being information used for a creation of the rule may be further provided.

In a first aspect of the present technology, a rule in order to set a presentation timing for presenting event information related to each event for each user is set, the presentation timing of the event information is set for each user, based on the set rule, and the event information is presented to each user at the set presentation timing.

In a second aspect of the present technology, a rule in order to set a presentation timing for presenting event information related to each event for a user, and the event information, are received from another information processing apparatus, a presentation timing for presenting the received event information is set, based on the received rule, and the event information is presented at the set presentation timing.

Advantageous Effects of Invention

According to a first aspect and a second aspect of the present technology, information related to an event can be presented to each user at an appropriate timing.

Brief Description of Drawings

[FIG. 1] FIG. 1 is a block diagram which shows an embodiment of an information processing system applicable to the present technology.
[FIG. 2] FIG. 2 is a block diagram which shows a configuration example of the functions of a first embodiment of a server.
[FIG. 3] FIG. 3 is a block diagram which shows a configuration example of the functions of a first embodiment of a client.
[FIG. 4] FIG. 4 is a figure which models the flow up until a user participates in an event.
[FIG. 5] FIG. 5 is a flow chart for describing a first embodiment of a presentation timing setting process.
[FIG. 6] FIG. 6 is a flow chart for describing a first embodiment of an event information presentation process.
[FIG. 7] FIG. 7 is a flow chart for describing a learning process.
[FIG. 8] FIG. 8 is a figure for describing a first example of a creation method of a presentation model.
[FIG. 9] FIG. 9 is a figure which shows a first specific example of a presentation model.
[FIG. 10] FIG. 10 is a figure which shows a second specific example of a presentation model.
[FIG. 11] FIG. 11 is a figure which shows a third specific example of a presentation model.
[FIG. 12] FIG. 12 is a figure for describing a second example of a creation method of a presentation model.
[FIG. 13] FIG. 13 is a figure for describing a second example of a creation method of a presentation model.
[FIG. 14] FIG. 14 is a figure for describing a second example of a creation method of a presentation model.
[FIG. 15] FIG. 15 is a figure for describing a third example of a creation method of a presentation model.
[FIG. 16] FIG. 16 is a flow chart for describing a second embodiment of a presentation timing setting process.
[FIG. 17] FIG. 17 is a flow chart for describing a Pull-type event information presentation process.
[FIG. 18] FIG. 18 is a block diagram which shows a configuration example of the functions of a second embodiment of a server.
[FIG. 19] FIG. 19 is a block diagram which shows a configuration example of the functions of a second embodiment of a client.
[FIG. 20] FIG. 20 is a flow chart for describing a context detection process.
[FIG. 21] FIG. 21 is a flow chart for describing a third embodiment of a presentation timing setting process.
[FIG. 22] FIG. 22 is a flow chart for describing a second embodiment of an event information presentation process.
[FIG. 23] FIG. 23 is a figure for describing a fourth example of a creation method of a presentation model.
[FIG. 24] FIG. 24 is a block diagram which shows a configuration example of the functions of a third embodiment of a client.
[FIG. 25] FIG. 25 is a block diagram which shows a configuration example of a computer.

Description of Embodiments

Hereinafter, the modes for executing the present technology (hereinafter called the embodiments) will be described. Note that, the description will be given in the following order.

1. First embodiment (the case where the context of a user is not considered)
2. Second embodiment (the case where the context of a user is considered)
3. Modified examples

<First embodiment>

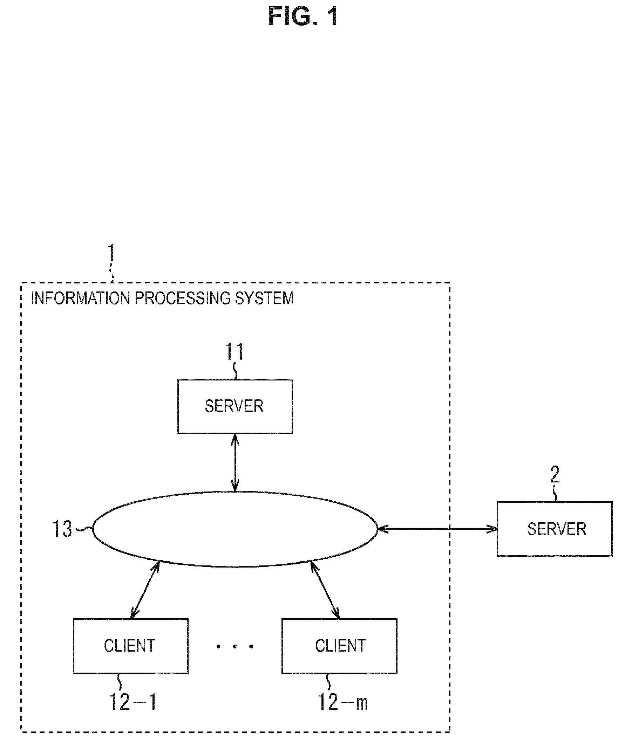

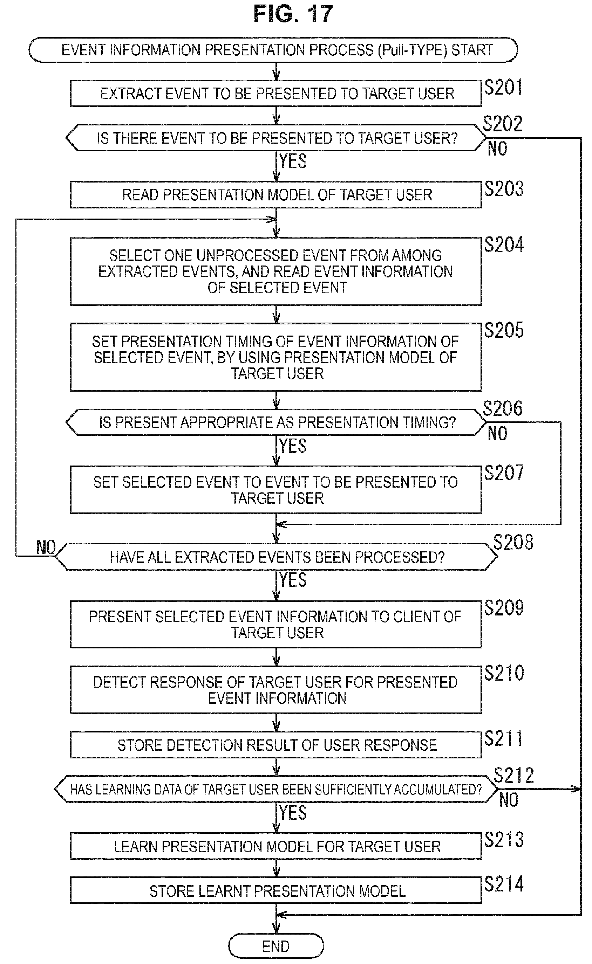

First, a first embodiment of the present technology will be described by referring to FIG. 1 through to FIG. 17.

[Configuration example of the information processing system 1]

FIG. 1 is a block diagram which shows an embodiment of an information processing system 1 applicable to the present technology.
The information processing system 1 is constituted by including a server 11, and clients 12-1 through to 12-n.

The server 11 and the clients 12-1 through to 12-n are mutually connected via a network 13. Further, the server 11 and the clients 12-1 through to 12-n are mutually connected to a server 2, via the network 13.

Note that, hereinafter, in the case where is it may not be necessary to individually distinguish the clients 12-1 through to 12-n, they will simply be called the client 12.

The server 11 provides a service (hereinafter, called an event related service) such as guidance, application, reservation and ticket sales of various types of events. Further, as will be described below, the server 11 can set an appropriate timing for presenting information related to various types of events (hereinafter, called event information) for each user, and can present event information at an appropriate timing to the client 12 used by each user.

Note that, the form of an event related service will not be particularly limited if it includes a mode capable of being provided to the client 12 by using the network 13, such as various types of websites. For example, other than a usual website which performs guidance, participation application or the like of an event, it is possible to take a form such as a Social Networking Service (SNS), or a contribution site of messages, videos or the like.

Further, the type of event to be targeted, which the server 11 handles by an event related service, will not be particularly limited if it has a holding date determined beforehand.

For example, an event to be targeted may be an event for which a reservation, an application or a purchase of tickets is possible beforehand, or may be an event for which these are not able to be performed. For example, there is a live performance (for example, a concert, play, sports match or the like), an exhibition, a movie, a tour trip or the like in the former, and there is a bargain sale or the like in the latter.

Further, for example, an event to be targeted may be an event for which a seating capacity is included, or may be an event for which a seating capacity is not included. For example, there is a live performance, a tour trip or the like in the former, and an exhibition, a bargain sale or the like in the latter.

In addition, for example, an event to be targeted may be a single occasion or near to a single occasion event, or may be an event continuing for a certain time period. For example, there is a concert, an international sports match or the like in the former, and there is a movie, an exhibition or the like in the latter. Further, an event continuing for a certain time period may be an event continuously held during a time period, or may be an event intermittently held during a time period. For example, there is a movie, an exhibition or the like in the former, and there is a concert tour or the like in the latter. Note that, it is possible for a concert tour to be classified into a single occasion event if seen from individual concerts.

Further, for example, an event to be targeted may be an event for which participation is only possible at a prescribed location, or may be an event for which participation is possible from a distance. For example, there is a live performance, a movie or the like in the former, and there is a live viewing, a pay-per-view or the like in the latter. Further, it may not be necessary for the former to be an event held at one location, for example, and may be an event held in a same time slot at a plurality of locations.

In addition, for example, an event to be targeted may be a participation-type event, or may be an experience-type event. For example, there is a live performance or the like in the former, and there is a tour trip or the like in the latter.

Further, an event to be targeted may be an event of a real space, or may be an event of a virtual space. For example, there is a live performance, a tour trip or the like in the former, and there is a virtual event held in a virtual world on the Internet, an online game tournament or the like in the latter.

The client 12 is constituted, for example, by an apparatus capable of using an event related service provided by the server 11, such as a personal computer, a portable information terminal, a mobile phone device, a smartphone, or a tablet terminal.

The server 2 provides a service different to the event related service provided by the server 11 to the client 12. Note that, the form of the service provided by the server 2 is not particularly limited, for example, and a website such as an SNS or a contribution site will be assumed. Also, for example, it is possible for the server 11 to detect a response of a user for each event, or to present event information to a user, by using the service provided by the server 2.

Note that, in FIG. 1, while one of each of the server 2 and the server 11 is illustrated, it is possible to include a plurality of them.

[Configuration example of the server 11 a]

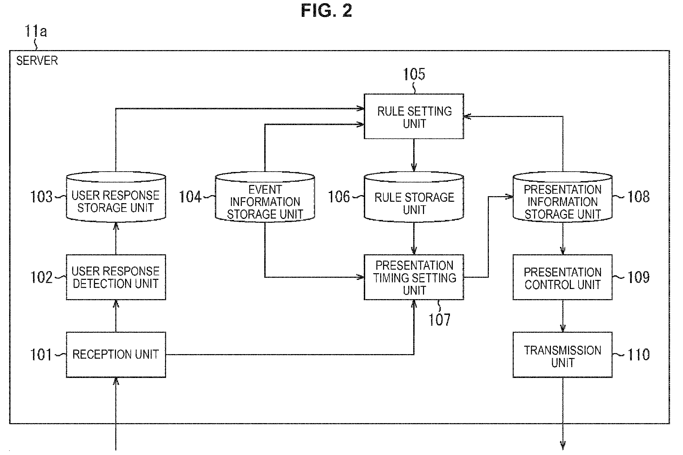

FIG. 2 is a block diagram which shows a configuration example of the functions of the server 11a which is a first embodiment of the server 11 of the information processing system 1.

The server 11a is constituted by including a reception unit 101, a user response detection unit 102, a user response storage unit 103, an event information storage unit 104, a rule setting unit 105, a rule storage unit 106, a presentation timing setting unit 107, a presentation information storage unit 108, a presentation control unit 109, and a transmission unit 110.

The reception unit 101 receives various types of information transmitted from the client 12 and the server 2, via the network 13, and supplies the received information to the user response detection unit 102 and the presentation timing setting unit 107 as necessary.

The user response detection unit 102 detects a response of each user for each event, based on information received from the client 12 or the server 2, and causes information which shows a detection result (hereinafter, called user response information) to be stored in the user response storage unit 103. Note that, an example of a user response to be a detection target will be described below.

The event information storage unit 104 stores event information related to each event handled by the server 11a. While it is possible for the contents of the event information to be arbitrarily set, for example, all or a part of the following information will be included.

• Name of the event
• Date information (information disclosure date, reservation, sales or application start and end dates, holding date or the like)
• Event outline (outline text, image or video for an event introduction, performer, word-of-mouth and reviews related to an event, Uniform Resource Locator (URL) of a website on which detailed information is published or the like)
• Holding location
• Cost (ticket price, admission fee or the like)
• Quantity, inventory information (seating capacity, sales number, remaining seat number or the like)

The rule setting unit 105 sets a rule (hereinafter, called a presentation rule) in order to set a presentation timing for presenting event information of each event for each user, and causes the set presentation rule to be stored in the rule storage unit 106.

For example, the rule setting unit 105 creates a presentation rule, by performing a learning process using user response information stored in the user response storage unit 103, event information stored in the event information storage unit 104, presentation information stored in the presentation information storage unit 108 or the like. Specifically, for example, the rule setting unit 105 learns a presentation model optimized for each user, and sets the created presentation model to a presentation rule of each user.

Here, the presentation model is a mathematical model in order to obtain an appropriate timing for presenting event information of each event to each user, based on information related to a user and an event. An arbitrary mathematical model, such as a linear regression model, a nonlinear regression model or a probability model, can be used for the presentation model. For example, an appropriate mathematical mode is adopted, by considering the contents or attributes of an event, data or a computational amount necessary for the learning of a presentation model or the like.

Further, for example, it is possible for the rule setting unit 105 to set a rule determined in advance to a presentation rule, without performing a learning process. For example, it is possible for the rule setting unit 105 to set a heuristic rule or logic, or a model based on these, prepared beforehand by a designer, operator or the like, to a presentation rule.

Note that, for example, a presentation rule may be separately set for each user such as in the above described presentation model, or a common presentation rule may be set for a plurality of users. Note that, in the case of the latter, a different presentation timing is set for each user, for example, by having a condition different for each user (for example, attributes of a user or the like) applied to a presentation rule, even if using a common presentation rule.

The presentation timing setting unit 107 sets a presentation timing for presenting event information of each event to each user, based on event information stored in the event information storage unit 104, and a presentation rule stored in the rule storage unit 106. The presentation timing setting unit 107 causes presentation information necessary for a presentation of event information to each user, such as a user to be targeted for presentation, a presentation timing, or contents to be presented, to be stored in the presentation information storage unit 108.

The presentation control unit 109 controls a presentation of event information in each client 12. For example, the presentation control unit 109 transmits event information, in which a presentation timing has been reached, to the client 12 of a user to be targeted for presentation, via the transmission unit 110 and the network 13, and causes the event information to be presented to the client 12 of a transmission destination.

The transmission unit 110 transmits various types of information to the client 12 and the server 2, via the network 13.

Note that, hereinafter, a case will be described which uses the above described presentation model as a presentation rule.

[Configuration example of the client 12a]

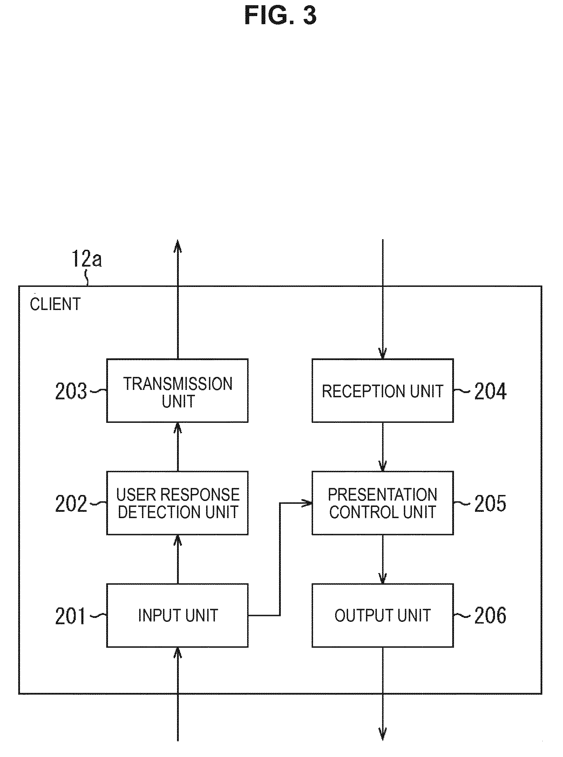

FIG. 3 is a block diagram which shows a configuration example of the functions of the client 12a which is a first embodiment of the client 12 of the information processing system 1.

The client 12a is constituted by including an input unit 201, a user response detection unit 202, a transmission unit 203, a reception unit 204, a presentation control unit 205, and an output unit 206.

The input unit 201 is constituted, for example, by various types of input devices such as a keyboard, a mouse, a touch panel and a microphone, various types of sensors, a position detection apparatus such as a Global Positioning System (GPS) reception unit or the like. The input unit 201 supplies information and instructions input by a user, sensor information, a position detection result or the like to the user response detection unit 202 and the presentation control unit 205.

The user response detection unit 202 detects a response of a user for each event, based on information supplied from the input unit 201 or the like. The user response detection unit 202 transmits user response information which includes a detection result to the server 11a, via the transmission unit 203 and the network 13. Note that, a response other than a response for event information presented by the server 11a, which will be described below, is also included in a response to be a detection target by the user response detection unit 202.

The transmission unit 203 transmits various types of information to the server 11a and the server 2, via the network 13.

The reception unit 204 receives various types of information transmitted from the server 11a and the server 2, via the network 13, and supplies the received information to the presentation control unit 205.

The presentation control unit 205 controls a presentation by the output unit 206, such as information received from the server 11a or the server 2, or a screen of a service provided by the server 11a or the server 2, in accordance with an instruction input by a user via the input unit 201 or the like.

The output unit 206 is constituted, for example, by various types of display devices such as a display, various types of audio output devices such as a speaker or an audio output terminal or the like.

[Flow up until a user participates in an event]

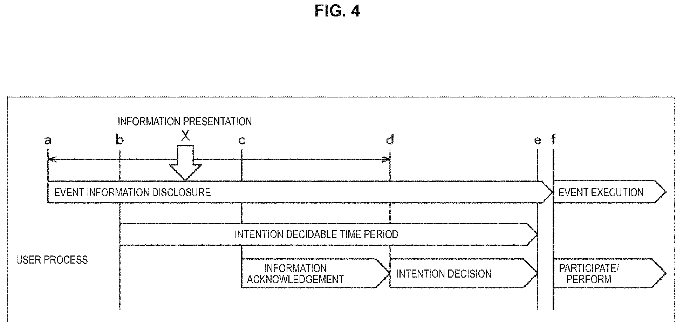

Here, before the processes of the information processing system 1 are described, the flow up until a user participates in an event will be described by referring to FIG. 4. FIG. 4 is a figure which shows the flow up until a user participates in an event modeled along a time series proceeding from the left in the right direction.

The timing a shows a timing at which the disclosure of event information is started (hereinafter, called an information disclosure start timing).

The timing b shows a timing at which an intention decidable time period, in which a user is capable of deciding an intention of participation in an event, is started (hereinafter, called an intention decidable time period start timing).

The timing c shows a timing at which a user initially acknowledges information related to an event (hereinafter, called an acknowledgement timing). Therefore, in this acknowledgement timing, a user initially knows the holding of an event.

The timing d shows a timing at which a user decides an intention to participate in an event (hereinafter, called an intention decision timing).

The timing e shows a timing at which an intention decidable time period is ended (hereinafter, called an intention decidable time period end timing).

The timing f shows a timing at which an event is started (hereinafter, called an event start timing). Note that, in the case of an event continuously performed in a certain time period, for the sake of convenience of the process, one of these will be selected, based on a prescribed condition (for example, a designation by an organizer, a schedule of a user, a prescribed algorithm or the like). Also, the event start timing f is set based on the selected event.

Further, the time period from the information disclosure start timing a up until the event start timing f is defined as an event information disclosure time period. Note that, while not necessarily limited to matching between a timing at which a disclosure of event information is ended and the event start timing f, for the sake of convenience of the process, the timing at which the event information disclosure time period is ended will be set to the event start timing f.

Further, the time period from the acknowledgement timing c up until the intention decision timing d becomes a time period in which an intention of participation has not yet been decided, in a state where a user has acknowledged an event. The time period from the intention decision timing d up until the intention decidable time period end timing e becomes a time period of a state where a user has decided an intention to participate in an event. The time period from the event start timing f onwards becomes a time period in which it is possible for a user to participate in an event, and for an event to be executed.

For example, in the case where an event to be targeted is a live performance for which a pre-sale of tickets is performed beforehand, and a seating capacity is determined, the information disclosure start timing a becomes a timing at which a disclosure of live performance information is started. The intention decidable time period start timing b becomes a timing at which the sale of tickets is started. The acknowledgement timing c becomes a timing at which a user initially acknowledges the live performance information. The intention decision timing d becomes a timing at which a user purchases a ticket of the live performance. The intention decidable time period end timing e becomes a timing at which the sale of tickets is ended. The event start timing f becomes a timing at which the live performance is started.

Note that, for example, in the case where the tickets have not sold out up until the holding of a live performance or the like, it is assumed that there will be cases where the intention decidable time period end timing e matches the event start timing f, or comes after the event start timing f. Further, for example, in the case where the sale of tickets is performed by dividing into a plural number of times by advanced reservations, usual sales or the like, it is assumed that there will be cases where a plural number of sets of the intention decidable time period start timing b and the intention decidable time period end timing e are set, or the intention decidable time period is divided into a plural number.

Further, for example, in the case where an event to be targeted is a bargain sale for which a pre-sale of tickets is not performed beforehand, and a seating capacity is not determined, the information disclosure start timing a and the intention decidable time period start timing b match at the timing at which a disclosure of bargain sale information is started. The acknowledgement timing c becomes a timing at which a user initially acknowledges the bargain sale information. The intention decision timing d becomes a timing at which a user decides an intention to go to the bargain sale. The intention decidable time period end timing e and the event start timing f match at the timing at which the bargain sale is started.

Also, in a presentation timing X from the information disclosure start timing a up until the intention decision timing d, for example, the server 11a presents event information to each user with the purpose of inviting participation in an event. Further, as will be described below, the presentation timing X is set to a different timing for each user, to increase the possibility of each user participating in an event, so that a participant number of an event increases.

[First embodiment of the processes of the information processing system 1]

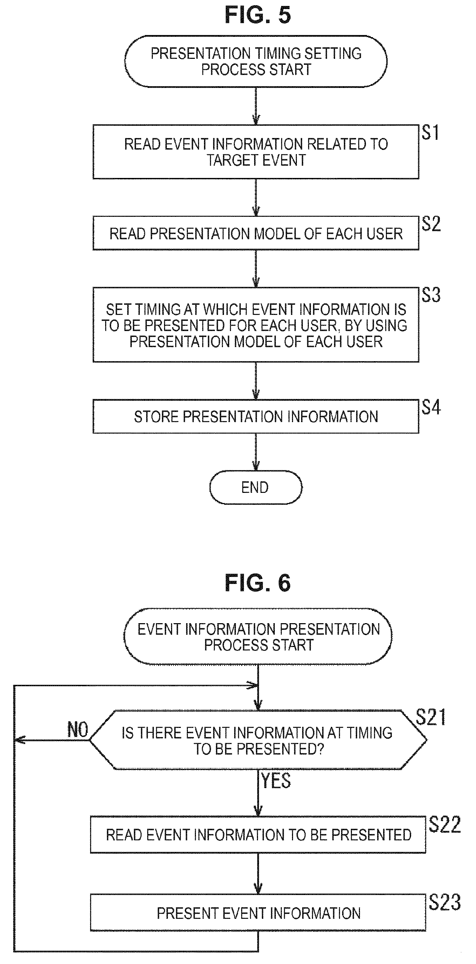

Next, a first embodiment of the processes of the information processing system 1 will be described by referring to FIG. 5 through to FIG. 17.

(First embodiment of the presentation timing setting process)

First, a first embodiment of a presentation timing setting process executed by the server 11a will be described by referring to the flow chart of FIG. 5.

Note that, this process is performed at an arbitrary timing for each event. For example, a process is executed periodically, or at a timing such as at the time when event information related to a new event is added, at the time when a new user is added, or at the time when registration information of a user has been changed.

Further, hereinafter, in this process, an event to be targeted for setting a presentation timing will be called a target event.

In step S1, the presentation timing setting unit 107 reads event information related to a target event from the event information storage unit 104.

In step S2, the presentation timing setting unit 107 reads a presentation model of each user from the rule storage unit 106.

In step S3, the presentation timing setting unit 107 sets a timing at which event information is to be presented for each user, by using a presentation model of each user. Note that, a specific example of a setting method of the presentation timing will be described below.

In step S4, the server 11a stores presentation information. Specifically, the presentation timing setting unit 107 causes presentation information necessary for a presentation of event information to each user, such as a user to be targeted for presentation, a presentation timing, or contents to be presented, to be stored in the presentation information storage unit 108.

Afterwards, the presentation timing setting process ends.

Note that, it is possible for a range of users to be targeted for setting a presentation timing in a one-time process to be arbitrarily set. For example, in the case where a presentation timing of event information related to a newly added event is set, all users may be made a target, or the range of users to be targeted may be limited, in accordance with the contents of an event or the like (for example, the genre, the performing artist or the like). Further, for example, in the case where a new user is added, or registration information of a user is updated, only this user may be set to a target.

(Event information presentation process)

Next, an event information presentation process executed by the server 11a will be described by referring to the flow chart of FIG. 6.

Note that, hereinafter, in this process, a user to be targeted for presenting event information will be called a target user.

In step S21, the presentation control unit 109 determines whether or not there is event information at a timing to be presented. For example, the presentation control unit 109 checks presentation information stored in the presentation information storage unit 108, and determines whether or not there is event information which has become a timing to be presented. This process is periodically repeated, for example, up until it is determined that there is event information which has become a timing to be presented, and in the case where it is determined that there is event information which has become a timing to be presented, the process proceeds to step S22.

In step S22, the presentation control unit 109 reads the event information to be presented from the presentation information storage unit 108.

In step S23, the presentation control unit 109 presents the event information. Specifically, the presentation control unit 109 transmits the read event information to the client 12a of a target user, via the transmission unit 110 and the network 13.

The presentation control unit 205 of the client 12a of the target user receives the event information, via the reception unit 204. The output unit 206 presents the event information, under the control of the presentation control unit 205.

Note that, an arbitrary method can be adopted for the method which presents event information to the target user. For example, an email including event information may be transmitted to the client 12a of the target user. Further, for example, event information may be published on the page of the target user of a website for members of an event related service.

In addition, for example, event information may be presented by using a service such as an SNS or a micro blog. In this case, it may not be necessary to use a service provided by the server 11a, for example, and it is possible to use an external service provided by the server 2.

Further, for example, in the case where the client 12a of the target user is constituted by a smartphone or a tablet terminal, event information may be presented by using an application program which operates on the client 12a.

Further, the contents of event information to be presented can be arbitrarily set. For example, it is possible to present all or a part of the contents of event information previously illustrated.

In addition, in the case of an event in which the seating capacity is determined, the remaining number may be presented together with event information, at the time when the remaining number of the seating capacity has become a prescribed threshold or less. By showing that such a remaining number is not much by a specific numerical value, a participation desire to an event of the target user can be increased.

Afterwards, the process returns to step S21, and the processes from step S21 onwards are executed.

(Learning process)

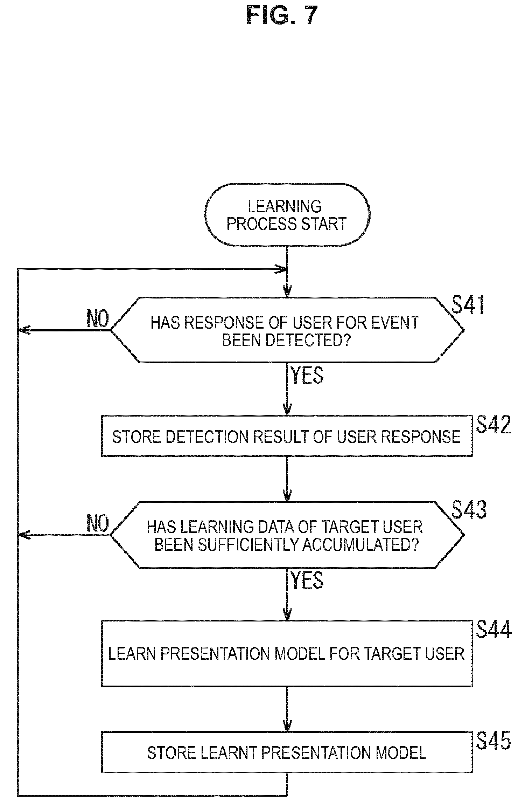

Next, a learning process executed by the server 11a will be described by referring to the flow chart of FIG. 7.

In step S41, the user response detection unit 102 determines whether or not a response of a user for an event has been detected. This process is periodically repeated, for example, up until it is determined that a response of a user for an event has been detected. Also, in the case where the user response detection unit 102 determines that a response of a user for an event has been detected, based on information received from the client 12a, the server 2 or the like, via the network 13 and the reception unit 101, the process proceeds to step S42.

Here, the response of a user to be a detection target is arbitrarily set in a range capable of being detected based on information from the client 12a, server 2 or the like. For example, browsing of information related to an event, adding a comment, an evaluation or the like for an event, making an application or a reservation of an event, purchasing a ticket or the like, participating in an event or the like is set to a detection target. Also, for example, at least one or more of the participation in an event of each user, the acknowledgement timing c of FIG. 4 and the intention decision timing d is directly or indirectly detected.

Further, the user response to be a detection target is separated into a response in which a relevance between event information to be presented is recognized directly by the server 11a or via an external service provided by the server 2 (hereinafter, called a direct response), and a response in which a relevance is not recognized (hereinafter, an indirect response).

Browsing this event information, or using an event related service provided by the server 11a via this event information, for example, will be assumed for a direct response. Further, accessing, contributing, tracking back or adding an evaluation (for example, pressing a "like" button) to a website provided by an event related service, performing a bookmark registration of the website, and making an application or reservation of an event, purchasing a ticket or the like using an event related service, for example, will be assumed for the use of an event related service.

A response of a user to event information to be independently presented by an external service provided by the server 2, for example, will be assumed for an indirect response. Further, a relevance with event information presented by the server 11a not being recognized, even if there is a response of a user in the event related service provided by the server 11a, is included in an indirect response. In addition, registration of a schedule of an event to a schedule function provided by the server 11a, the server 2 or the client 12a, going to an event hall detected based on position information of the client 12a or the like, for example, will be assumed for an indirect response.

Note that, hereinafter, in this process, a user having a response for an event detected will be called a target user.

In step S42, the server 11a stores a detection result of a user response. Specifically, the user response detection unit 102 causes user response information, which includes the target user, the event to be targeted, the responded date, the type of response, the presence of a relevance with the presented event information or the like, to be stored in the user response storage unit 103.

In step S43, the rule setting unit 105 determines whether or not learning data of the target user has been sufficiently accumulated. For example, in the case where learning of a presentation model of the target user has not been performed at all, the rule setting unit 105 determines that learning data of the target user has been sufficiently accumulated, at the time when an accumulation amount of user response information of the target user has become a prescribed threshold or more, and the process proceeds to step S44. Further, for example, in the case where learning a presentation model of the target user is finished, the rule setting unit 105 determines that learning data of the target user has been sufficiently accumulated, at the time when an accumulation amount of user response information of the target user from when previously executing learning has become a prescribed threshold or more, and the process proceeds to step S44.

In step S44, the rule setting unit 105 learns a presentation model for the target user. Note that, a specific example of a learning method of a presentation model will be described below.

In step S45, the server 11a stores the learnt presentation model. That is, the rule setting unit 105 causes the presentation model of the target user created by the learning process of step S44 to be stored in the rule storage unit 106.

Afterwards, the process returns to step S41, and the processes from step S41 onwards are executed.

On the other hand, in step S43, in the case where it is determined that learning data of the target user has not been sufficiently accumulated, the process returns to step S41, and the processes from step S41 onwards are executed.

(Specific example of a learning method of a presentation model and a setting method of a presentation timing of event information)

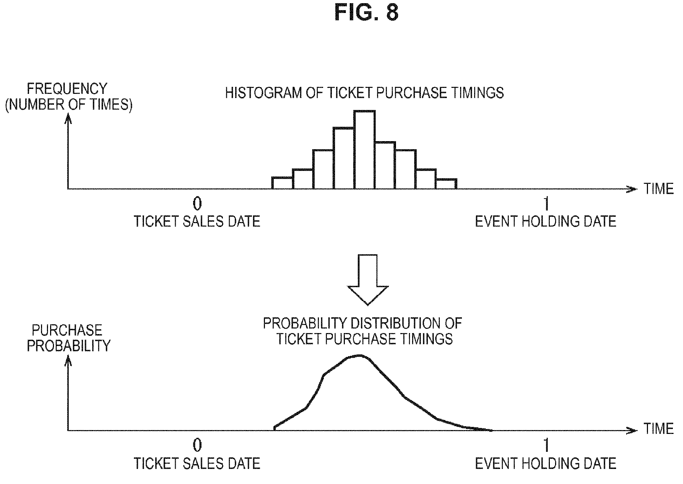

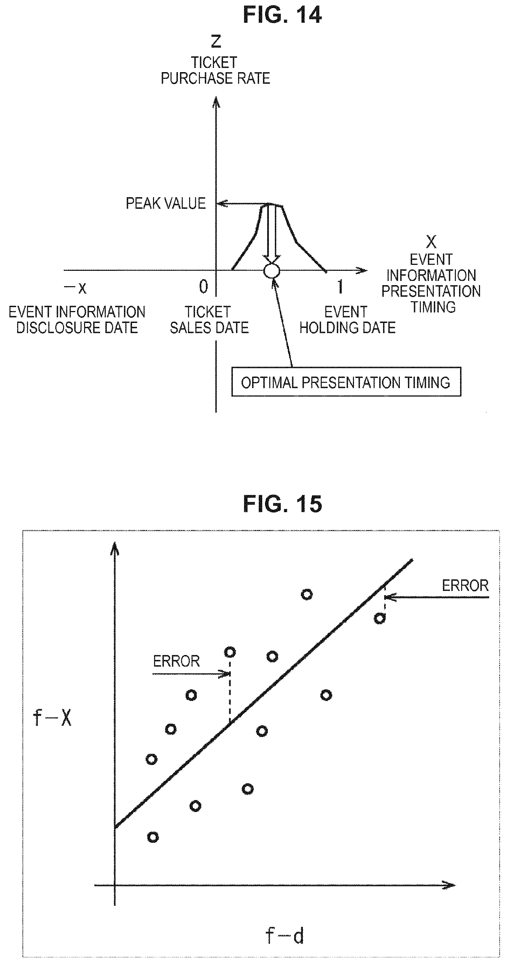

Here, a specific example of a learning method of a presentation model, and a setting method of a presentation timing of event information, will be described by referring to FIG. 8 through to FIG. 15. Note that, hereinafter, in the description of this specific example, a user to be targeted for a process will be called a target user, and an event to be targeted for presenting information will be called a target event.

For example, the rule setting unit 105 learns an intention decision timing of the target user, and creates a presentation model based on this learning result. Specifically, in the case of an event such as a live performance for which a pre-sale of tickets is performed, a purchase timing of tickets becomes an intention decision timing. Accordingly, for example, the rule setting unit 105 learns a distribution of the purchase timings of tickets of the target user, and creates a probability model as a presentation model based on this distribution.

For example, the rule setting unit 105 creates a histogram of the purchase timings of tickets of the target user, such as shown in the upper figure of FIG. 8. At this time, the sales date of tickets is set to a start point (0), and the holding date of an event is set to an end point (1). In this way, the histogram is normalized so that the purchase timing of tickets takes a value from 0 to 1.

Next, the rule setting unit 105 obtains a probability distribution obtained by estimating a probability density of ticket purchase timings based on the created histogram, as a presentation model of the target user, such as shown in the lower figure of FIG. 8. At this time, an appropriate probability distribution is used corresponding to the properties of the histogram, from among various types of probability distributions such as a Gaussian distribution, a logarithmic normal distribution, an exponential distribution, a Weibull distribution, a triangular distribution, a standard normal distribution, a t-distribution, a chi-squared distribution and an F-distribution.

Also, the presentation timing setting unit 107 sets a presentation timing of event information, based on the created presentation model. For example, the presentation timing setting unit 107 calculates the date at which the probability for purchasing tickets of the target user (hereinafter, called a ticket purchase rate) becomes the highest, based on the presentation model of the target user, and sets the calculated date to a presentation timing.

Note that, in this presentation model, the presentation timing (the date at which the ticket purchase rate of the target user becomes the highest) is set on the basis of one or more of the intention decidable time period start timing b, the intention decidable time period end timing e and the event start timing f of FIG. 4. For example, the presentation timing is obtained, in a form such as d days after the intention decidable time period start timing b, h hours prior to the event start timing f, or an intermediate point between the intention decidable time period start timing b and the event start timing f.

In this way, event information is presented at an appropriate timing for each user, based on behavioral characteristics for an event of each user, and more specifically, a time period tendency of an intention decision of a participation in an event of each user. That is, event information is present for each user, in a time period where the ticket purchase rate of the target event becomes the highest, that is, in a time period where it is easiest to attract participation in a target event, and an advertising effect and customer attracting effect is the highest. As a result of this, for example, the purchasing rate of tickets for the presented event information, and the participation rate of an event of each user, can be improved.

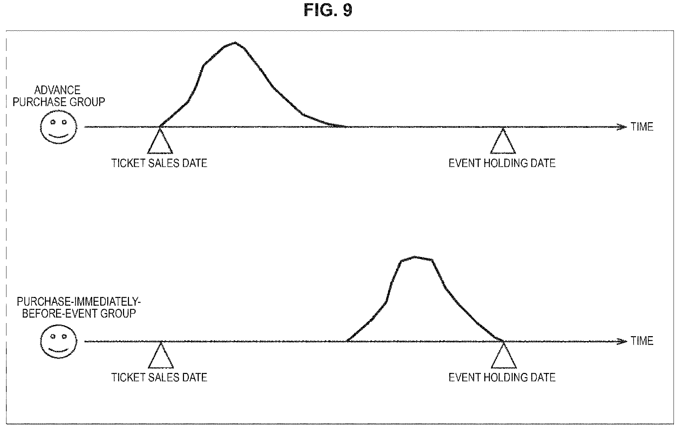

As a specific example of the presentation model of FIG. 8, FIG. 9 shows an example of a presentation model of two typical users of an advance purchase group and a purchase-immediately-before-event group.

The users of the advance purchase group are users with a tendency to very carefully plan and perform an intention decision of participation of an event. A presentation model of the users of the advance purchase group has a ticket purchase rate which becomes the highest in a time period near to the sales date of tickets, for example, such as shown in the upper side of FIG. 9. Therefore, event information is presented within a prescribed time period from a ticket sales start for users of the advance purchase group.

The users of the purchase-immediately-before-event group are users with a tendency to perform an intention decision of participation immediately before the holding of an event. A presentation model of the users of the purchase-immediately-before-event group has a ticket purchase rate which becomes the highest in a time period near to the holding date of an event, for example, such as shown in the lower side of FIG. 9. Therefore, event information is presented within a prescribed time immediately before an event start for users of the purchase-immediately-before-event group.

Note that, the tendency of a purchase timing of tickets is assumed to be different, for a same user, due to variation factors based on the contents and attributes of an event. Here, the contents of an event are specific contents of an event such as the type of event, the performer, the holding area or the holding date, and the attributes of an event are information related to an event other than the contents of an event. Further, the type of event, the genre, the popularity rating, the performer, the customers, the holding form, the holding time period, the holding area, the sales state of tickets or the like, the cost or the like can be considered, for example, as variation factors influencing the purchase timing of tickets.

Accordingly, an event may be classified into a plurality of two or more groups based on one or more factors (that is, variation factors) representing the contents or attributes of an event, and a presentation model of each user may be created separately for each group.

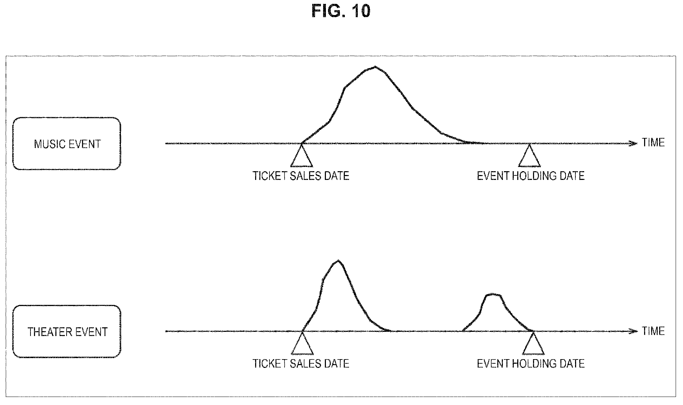

For example, FIG. 10 shows an example in which a presentation model for a music event and a presentation model for a theater event are created separately for a same user.

A music event is often a single occasion or a small number of performances, and is often sold out beforehand. Accordingly, it will be assumed that only one peak appears in the time period near to the ticket sales date, for example, such as shown in the upper side of FIG. 10, in a presentation model for a music event. Therefore, event information is presented, within a prescribed time period after a ticket sales start, for a music event.

On the other hand, a theater event is often repeatedly held within a prescribed time period, and often tickets remain even immediately before being held. Accordingly, it will be assumed that two peaks appear in the time period near to the ticket sales date and in the time period near to the holding date of an event, for example, such as shown in the lower side of FIG. 10, in a presentation model for a theater event. Therefore, first, event information is presented, within a prescribed time period before and after a ticket sale start, for a theater event. Further, in the case where not reaching a purchase of tickets here, event information is again presented within a prescribed time period immediately before an event start.

In this way, it becomes possible to present event information to each user at a more appropriate timing, in accordance with the contents or attributes of an event. As a result of this, for example, the purchasing rate of tickets for the presented event information, and the participation rate of an event of each user, can be additionally improved.

Note that, it is possible to set and control the presentation frequency of event information, based on the number of peaks (or mountains) equal to or greater than a prescribed threshold of a presentation model, such as shown in this example of FIG. 10. For example, as described above, it is possible to present only one event information for a music event with a number of peaks of one, and to present a maximum of two event information for a theater event with a number of peaks of two.

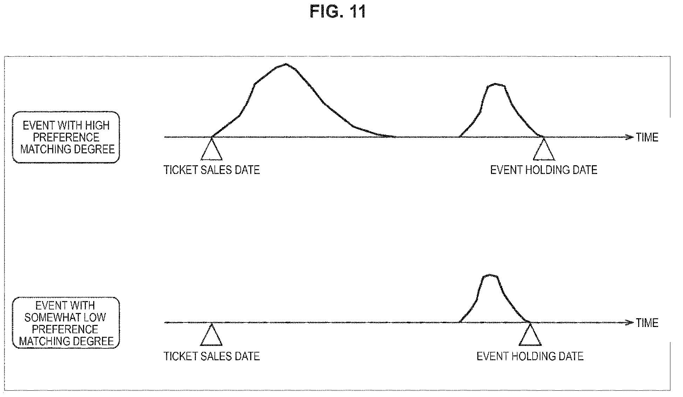

Further, the tendency of a purchase timing of tickets is assumed to be different, for a same user, due to a preference degree for an event. For example, FIG. 11 shows an example in which a presentation model for an event with a high preference matching degree, and a presentation model for an event with a somewhat low preference matching degree, are created separately for a same user.

For example, it is assumed that tickets will often be purchased in a time period near to the ticket sales date, by a reason such as adjusting a schedule a considerable time prior to a holding date so as to participate, or securing a good seat, for an event with a high preference matching degree. Further, for example, in the case where a schedule can be secured or the like, it is assumed that there will often be cases where tickets are purchased at the last minute in a time period near to the event holding date. Accordingly, it will be assumed that two peaks appear in a time period near to the ticket sales date and in a time period near to the holding date of an event, for example, such as shown in the upper side of FIG. 11, for a presentation model for an event with a high preference matching degree.

Therefore, first, event information is presented, within a prescribed time period before and after a ticket sale start, for an event with a high preference matching degree. Further, in the case where not reaching a purchase of tickets here, event information is again presented within a prescribed time period immediately before an event start.

On the other hand, it is assumed that there will often be cases where tickets are purchased in a time period near to the event holding date, by a reason such as hesitating in participating, participating if a schedule is empty, for example, for an event with a somewhat low preference matching degree. Accordingly, it will be assumed that only one peak appears in a time period near to the ticket sales date, for example, such as shown in the lower side of FIG. 11, for a presentation model for an event with a somewhat low preference matching degree.

Therefore, event information is presented, within a prescribed time period before and after a ticket sales start, for an event with a somewhat low preference matching degree.

In this way, it becomes possible to present event information to each user at a more appropriate timing, in accordance with a preference degree for an event. As a result of this, for example, the purchasing rate of tickets for the presented event information, and the participation rate of an event of each user, can be additionally improved.

Note that, it is possible for learning of a preference for an event of each user to be performed, by the rule setting unit 105, based on user response information of each user, that is, based on a response for each event of each user. Further, this learning method is not limited to a specific method, and an arbitrary method can be adopted. For example, a method can be adopted which is used by an existing recommendation system or the like, such as content base file filtering (CBF) or cooperative filtering (CF).

Alternatively, for example, information related to preferences of a user (for example, the types, genres or the like of events which are liked or disliked) may be acquired beforehand by a questionnaire or the like, and an event may be classified based on the acquired information.

Further, the number of groups in the case where classifying an event based on preferences of a user can be set to two or more arbitrary values.

In addition, a classification method of an event is not limited to the above-described example, and it is possible to perform classification by another method. For example, an event may be classified by genres a user has participated in and genres not participated in.

Note that, in the above example, an example has been shown which sets a presentation timing, by assuming that the purchase of tickets is performed at approximately the same time as the presentation of event information by the server 11 a. In other words, an example has been shown which sets a presentation timing, by assuming that the presentation timing X, the acknowledgement timing c and the intention decision timing d of FIG. 4 become an approximately same timing.

However, a time difference usually occurs from the presentation timing X up until the acknowledgement timing c, and from the acknowledgement timing c up until the intention decision timing d, and the purchase of tickets may not necessarily be limited to being performed at approximately the same time as the presentation of event information. Accordingly, the presentation timing may be ahead of the time period in which a presentation model becomes a peak (the time period in which the ticket purchase rate becomes a peak), by considering the time difference between the presentation timing of event information and the purchase timing of tickets.

For example, the length between the presentation timing X and the intention decision timing d, that is, the length of the time period from when event information is presented by the server 11a up until deciding an intention of participation, may be additionally learnt for each user. For example, an average value of the length between the presentation timing X and the intention decision timing d is obtained for each user. Also, for example, the timing ahead of only the learnt time period length may be set to a presentation timing, from the time period in which the presentation model becomes a peak.

Further, it will be assumed that the length from the presentation timing X up until the acknowledgement timing c, from within the length between the presentation timing X and the intention decision timing d, varies significantly due to the presentation method of event information. For example, in the case where event information is presented by using an application program operated by a smartphone, it is assumed that there will be a high possibility that an acknowledgement by a user is performed at approximately the same time as the presentation of event information. On the other hand, for example, in the case where event information is presented by an email, since it is not known when the email was written, it is assumed that time of some extent may be necessary up until the presented event information is acknowledged by a user. Therefore, the time ahead of the above described presentation timing may be changed, due to the presentation method of event information.

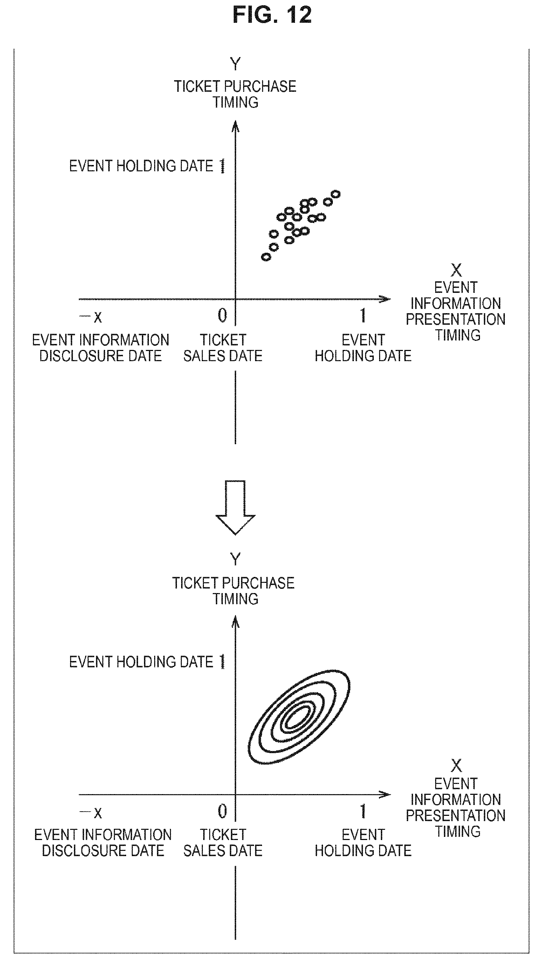

Further, it is possible to use a multi-dimensional probability distribution of two-dimensions or more for the probability distribution used for a presentation model. FIG. 12 through to FIG. 14 show examples in which a presentation model is created based on a learning result of a relationship between the presentation timing and the intention decision timing, and a presentation timing is set based on this presentation model, by using a multi-dimensional probability distribution.

For example, as shown in the upper figure of FIG. 12, the rule setting unit 105 sets the X axis to a presentation timing of event information, sets the Y axis to a purchase timing of tickets (that is, an intention decision timing), and creates a distribution chart which shows the relationship between the presentation timing and purchase timing of a target user. At this time, a sales date of tickets is set to a start point (0) and a holding date of an event to an end point (1), for both the X axis and the Y axis. In this way, the distribution chart is normalized so that the presentation timing and the purchase timing take values from 0 to 1. Further, a release date of event information is set to -x.

Next, the rule setting unit 105 obtains a probability distribution of the ticket purchase rate for the presentation timing and the purchase timing of a target user, by estimating a probability density of the presentation timing and the purchase timing based on the created distribution chart. At this time, an appropriate probability distribution is used corresponding to the properties of the distribution chart.

In this way, for example, as schematically shown in the lower part of FIG. 12, a probability model is created in which the set of points plotted on the two-dimensional distribution chart of the upper part of FIG. 12 is modeled in accordance with the density of the points. Note that, in the lower figure of FIG. 12, the illustration of the Z axis corresponding to a ticket purchase rate, which extents forward from the inside in a direction perpendicular to the paper surface, is omitted. Further, in the lower figure of FIG. 12, the probability distribution is shown in the form of contour lines in which the values of the Z axis direction connect same points. Therefore, the change of the value of the Z axis direction becomes sudden as the density of the lines increases, and the change of the value of the Z axis direction becomes gradual as the density of lines decreases. Further, the value of the Z axis direction (ticket purchase rate) becomes a peak within the innermost side closed curve.

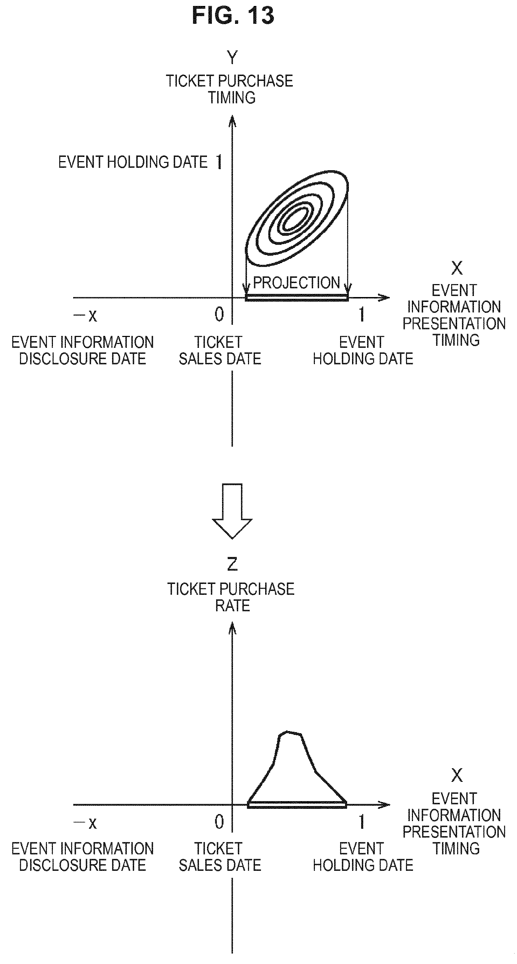

Next, the rule setting unit 105 projects the created probability model onto a two-dimensional coordinate system constituted from the X axis and the Z axis, such as shown in the upper figure of FIG. 13. In this way, a probability model of the ticket purchase rate for an event information presentation timing is created, such as shown in the lower figure of FIG. 13. The rule setting unit 105 sets this probability model to a presentation model of a target user.

Also, the presentation timing setting unit 107 sets a presentation timing of event information, based on the created presentation model. For example, in a presentation model, the presentation timing setting unit 107 sets a date corresponding to the value of the event information presentation timing of the X axis direction, at which the ticket purchase rate of the Z axis direction becomes a peak, as an optimal presentation timing of event information for a target user. At this time, in the case where a plurality of peaks exceeding a prescribed threshold appear in the presentation model, a plurality of presentation timings of event information may be set for each of these peaks.

Next, an example of the case where a presentation model is created by using a linear regression model will be described by referring to FIG. 15.

For example, the rule setting unit 105 assumes the following regression equation (1).

$$f\text{-}X = A(f\text{-}d) + B(d\text{-}c) + C(e\text{-}b) \; ... \; (1)$$

Note that, b through to f show each of the timings of FIG. 4. Therefore, f-X represents a timing difference between an intention decision of a user and information presentation. f-D represents a timing difference between an intention decision of a user and participation in or execution of an event. d-c represents a timing difference between an intention decision and an acknowledgement of information related to an event. e-b represents a length of an intention decidable time period. Further, A through to C are prescribed parameters (coefficients).

For example, the rule setting unit 105 obtains timings b through to f in a past action of a target user as learning data, based on information stored in the event information storage unit 104, the user response storage unit 103 and the presentation information storage unit 108. Also, as schematically shown in FIG. 15, the rule setting unit 105 calculates parameters A through to C in which a square error becomes a minimum, based on the learning data, and creates a presentation model constituted from a linear regression model by the regression equation (1).

Also, the presentation timing setting unit 107 sets a presentation timing of event information of a target event for a target user, based on the regression equation (1). Here, a case will be described where a target event is a live performance or the like for which a pre-sale of tickets is performed.

The timings a, b and f are obtained from event information of a target event. Accordingly, the presentation timing setting unit 107 performs an estimation or setting of the timings e, d and c.

For example, in the case where it is anticipated that the tickets will not sell out, the intention decidable time period end timing e is set to a date on which the sale of tickets is ended. On the other hand, in the case where it is anticipated that the tickets will sell out, a date on which it is anticipated that the tickets will sell out is estimated for the intention decidable time period end timing e.

For example, the intention decidable time period end timing e can be estimated from sales results of a similar type of event in the past. For example, in the case where a target event is a concert, data can be collected for whether the tickets were sold out, in a past concert of the same artist, at the time when a percentage of the time period from the intention decidable time period start timing b (ticket sales start date) up until an event start timing f has elapsed. Also, it can be considered to set the intention decidable time period end timing e, based on this average value.

Further, it will be assumed that the intention decision timing d varies due to a matching degree of preferences for a target event of a target user, for example, such as described above by referring to FIG. 11. Therefore, for example, in the case where the preference matching degree is at or more than a prescribed threshold, it can be considered to set the intention decision timing d to the intention decidable time period start timing b. Further, in the case where the preference matching degree is less than a prescribed threshold, it can be considered to set the intention decision timing d to be slightly prior to the intention decidable time period end timing e.

Further, the following regression equation (2) may be estimated by using a linear regression model, and the intention decision timing d may be estimated by using the regression equation (2).

$$e\text{-}d = D(e\text{-}b) + E \ ... \ (2)$$

Note that, D and E represent prescribed parameters (coefficients).

In addition, when the acknowledgement timing c is too early with respect to the intention decision timing d, there is the possibility that event information will be forgotten up until performing an intention decision. Accordingly, for example, the acknowledgement timing c is set to be immediately before the intention decision timing d. Specifically, the acknowledgement timing c is set to a timing only a prescribed time T prior to the intention decision timing d.

Note that, for example, the time T is set based on the length between the intention decidable time period start timing b and the intention decision timing d. For example, in the case where there are several tens of days between the intention decidable time period start timing b and the intention decision timing d, the time T is set to approximately one day, and in the case where there are several hours between the intention decidable time period start timing b and the intention decision timing d, the time T is set to approximately several tens of minutes.

Also, a presentation timing X is obtained, by substituting the timings b through to f obtained as described above into the regression equation (1).

In this way, an appropriate presentation timing can be obtained, by using a linear regression model.

Note that, for example, the presentation timing X may be set to a date only a prescribed time ahead of the acknowledgement timing c set by the above described method, without using the regression equation (1). At this time, for example, an average value of the time between the presentation timing X and the acknowledgement timing c of a target user can be obtained, based on past user response information, and the obtained average value can be set to a time set ahead. Alternatively, as described above, since it is assumed that the time from when event information is presented up until performing an acknowledgement varies, due to the presentation method of event information, the time set ahead may be changed due to the presentation method of event information.

(Process in the case where the presentation timing changes before acknowledgement and after acknowledgement of an event)

Incidentally, it is assumed that there will be cases where a user has already acknowledged an event by a different route, prior to the server 11a presenting event information. Also, in the cases where a user has not acknowledged or has acknowledged an event beforehand, it is assumed that an appropriate timing for the server 11a to present event information related to this event will change. That is, it is assumed that an appropriate presentation timing X will change, by whether the presentation timing X of FIG. 4 comes before or after the acknowledgement timing c. More specifically, in the case where an event is acknowledged for the first time by event information presented by the server 11 a, or in the case where event information is presented by the server 11a for an already acknowledged event, it is assumed that an appropriate presentation timing X will change.

Accordingly, for example, in the cases where a user has not acknowledged and has acknowledged an event beforehand, a different presentation model may be set. This, for example, can be implemented by separating learning data into the case where the server 11a presents event information prior to a user acknowledging an event, and the case where the server 11a presents event information after being acknowledged, and individually creating a presentation model for each case. Note that, it can be determined whether or not a user will acknowledge an event beforehand, based on the above described indirect response.

Note that, hereinafter, a presentation model used prior to a user acknowledging an event will be called a presentation model prior to acknowledgement, and a presentation model used after a user has acknowledged an event will be called a presentation model after acknowledgement.

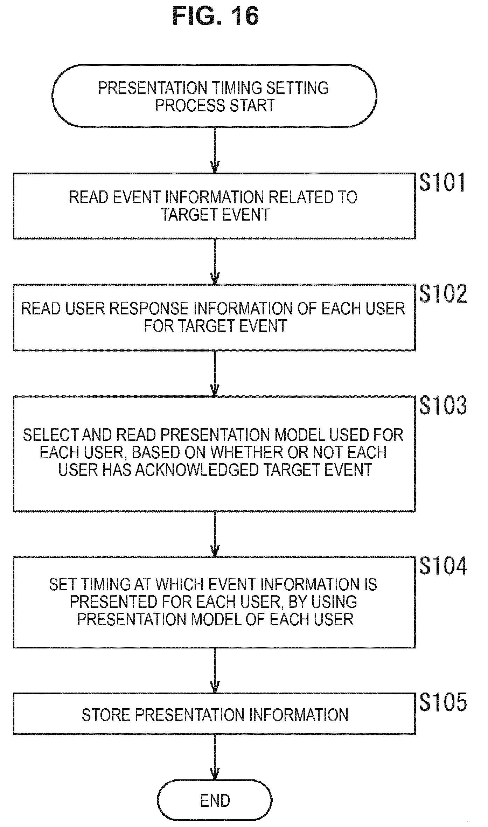

Here, a presentation timing process executed by the server 11a, in the cases where a presentation timing of event information is changed prior to acknowledgement and after acknowledgement of an event, will be described by referring to the flow chart of FIG. 16.

In step S101, similar to the process of step S1 of FIG. 5, event information related to a target event is read from the event information storage unit 104.

In step S102, the presentation timing setting unit 107 reads user response information of each user for the target event from the user response storage unit 103.

In step S103, the presentation timing setting unit 107 selects and reads a presentation model used for each user, based on whether or not each user has acknowledged the target event. Specifically, the presentation timing setting unit 107 detects whether or not each user has acknowledged the target event, based on the read user response information. Also, for users who have not yet acknowledged the target event, the presentation timing setting unit 107 reads a presentation model prior to acknowledgement of these users from the rule storage unit 106. On the other hand, for the users who have already acknowledged the target event, the presentation timing setting unit 107 reads a presentation model after acknowledgement of these users from the rule storage unit 106.

In step S104, similar to the process of step S3 of FIG. 5, the timing at which the event information is presented for each user is set, by using the presentation model of each user.

In step S105, similar to the process of step S4 of FIG. 5, presentation information is stored.

Afterwards, the presentation timing setting process ends.

In this way, it becomes possible to present event information to each user at a more appropriate timing, in accordance with whether or not each user has already acknowledged a target event. As a result of this, for example, the purchasing rate of tickets for the presented event information, and the participation rate of an event of each user, can be additionally improved.

Note that, the presentation model after acknowledgement may be separated into a plurality of presentation models for each method acknowledging an event. This, for example, can be implemented by separating learning data for each method in which a user has acknowledged an event prior to the server 11a presenting event information, and creating an individual presentation model for each acknowledged method. Note that, for example, while it can be considered that the method acknowledging an event performs classification by the type of service triggered by the user acknowledging an event prior to presenting event information, from among a plurality of services provided by the server 11 or the server 2, it is not limited to this.

Also, the presentation timing may be set by separately using a presentation model, by the method in which each user has acknowledged an event beforehand. That is, the presentation timing may be set, by classifying an event acknowledged by a user by the method acknowledging this event.

(Event information presentation process (Pull-type))

In the above described example, a Push-type process which performs a presentation of event information led by the server 11a, without depending on a request from the client 12a, has been described. Next, a Pull-type process in which the server 11a performs a presentation of event information, by a request from the client 12a, will be described by referring to FIG. 17.

Note that, hereinafter, in this process, a user to be targeted for presenting event information will be called a target user.

For example, the target user inputs a request of a presentation of event information to the input unit 201 of the client 12a, by using an application program or the like executed on the client 12a. The input unit 201 notifies that a presentation of event information has been requested to the user response detection unit 202. The user response detection unit 202 transmits an event information presentation request signal which shows a request of a presentation of event information, via the transmission unit 203. Also, the process of FIG. 17 is started, at the time when the presentation timing setting unit 107 of the server 11a receives the event information presentation request signal, via the network 13 and the reception unit 101.

In step S201, the presentation timing setting unit 107 extracts an event to be presented to the target user. That is, the presentation timing setting unit 107 extracts an event in which event information is to be presented to the target user, from among events for which event information is stored in the event information storage unit 104.

Here, it is possible for an extraction condition of an event to be arbitrarily set. For example, all scheduled events to be held in the future may be extracted, or events to be held within a prescribed time period may be extracted. Further, for example, the genre or the like of an extracted event may be narrowed down, based on a preference of the target user. In addition, for example, in the case where an extraction condition set by a user or the like is shown in the event information presentation request signal, an event may be extracted in accordance with this extraction condition.

In step S202, the presentation timing setting unit 107 determines whether or not there is an event to be present to the target user, based on a result of the process of step S201. In the case where it is determined that there is an event to be present to the target user, the process proceeds to step S203.

In step S203, the presentation timing setting unit 107 reads a presentation model of the target user from the rule storage unit 106.

In step S204, the presentation timing setting unit 107 selects one unprocessed event from among the extracted events, and reads event information of the selected event from the event information storage unit 104.

In step S205, similar to the process of step S3 of FIG. 5, a presentation timing of event information of the selected event is set, by using the presentation model of the target user.

In step S206, the presentation timing setting unit 107 determines whether or not the present is appropriate as a presentation timing. For example, in the case where the presentation timing set by the process of step S204 is within a prescribed range from the present date, the presentation timing setting unit 107 determines that the present is appropriate as a presentation timing, and the process proceeds to step S206.

In step S207, the presentation timing setting unit 107 sets the selected event to an event to be presented to the target user. Also, the presentation timing setting unit 107 causes event information of the selected event to be stored in the presentation information storage unit 108.

Afterwards, the process proceeds to step 208.

On the other hand, in step S206, in the case where it is determined that the present is not appropriate as a presentation timing, the process of step S207 is skipped, and the process proceeds to step S208.

In step S208, the presentation timing setting unit 107 determines whether or not all of the extracted events have been processed. In the case where it is determined that all of the extracted events have not yet been processed, the process returns to step S204.

Afterwards, in step S208, the processes of steps S204 through to S208 are repeatedly executed up until it is determined that all of the extracted events have been processed. In this way, event information in which the present is an appropriate timing for presenting to the target user is extracted, and is accumulated in the presentation information storage unit 108.

On the other hand, in step S208, in the case where it is determined that all of the extracted events have been processed, the process proceeds to step S209.

In step S209, the server 11a presents the selected event information to the client 12a of the target user. Specifically, the presentation control unit 109 reads event information accumulated in the presentation information storage unit 108 as the event information to be presented to the target user. The presentation control unit 109 transmits the read event information to the client 12a of the target user, via the transmission unit 110 and the network 13.

The presentation control unit 205 of the client 12a of the target user receives the event information, via the reception unit 204. The output unit 206 presents the event information, under the control of the presentation control unit 205. For example, the output unit 206 presents events corresponding to the received event information in a list (hereinafter, called an event list).

In this way, an event list constituting of events, which have an appropriate timing for presenting event information at the time when the target user has made a request, for example, is presented to the target user.

In step S210, the user response detection unit 102 detects a response of the target user for the presented event information. Here, a detection of a direct response is mainly performed, from among the above described direct response and indirect response. For example, the user response detection unit 102 performs a detection of actual browsed event information and the browsed date by the target user from among a plurality of presented event information, and a direct response other than browsing (for example, a purchase of tickets or the like) for the browsed event information, based on information from the client 12a of the target user.

In step S211, similar to the process of step S42 of FIG. 7, a detection result of a user response is stored.

In step S212, similar to the process of step S43 of FIG. 7, it is determined whether or not learning data of the target user has been sufficiently accumulated. In the case where it is determined that learning data of the target user has been sufficiently accumulated, the process proceeds to step S213.

In step S213, similar to the process of step S44 of FIG. 7, a presentation model for the target user is learnt.

In step S214, similar to the process of step S45 of FIG. 7, the learnt presentation model is stored.

Afterwards, the event information presentation process (Pull-type) ends.

On the other hand, in step S212, in the case where it is determined that learning data of the target user has not been sufficiently accumulated, the processes of steps S213 and S214 are skipped, and the event information presentation process (Pull-type) ends.

Further, in step S202, in the case where it is determined that there is no event to be presented to the target user, the processes of steps S203 through to S214 are skipped, and the event information presentation process (Pull-type) ends. Note that, at this time, while an illustration is omitted, for example, the fact that there is no event information to be presented is presented to the client 12a of the target user.

In this way, even in the case where event information is presented by a request from a user, the event information is presented at an appropriate timing. As a result of this, for example, the purchasing rate of tickets for the presented event information, and the participation rate of an event of each user, can be improved.

Further, since the presented event information is carefully selected, information necessary for a user is prevented from being buried in other unimportant information.

<Second Embodiment>

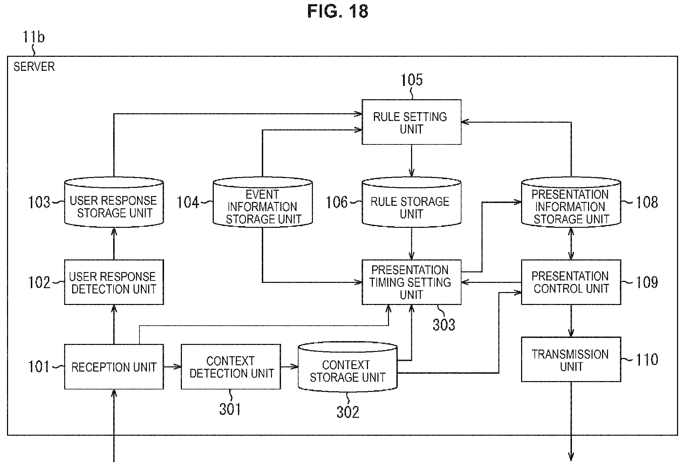

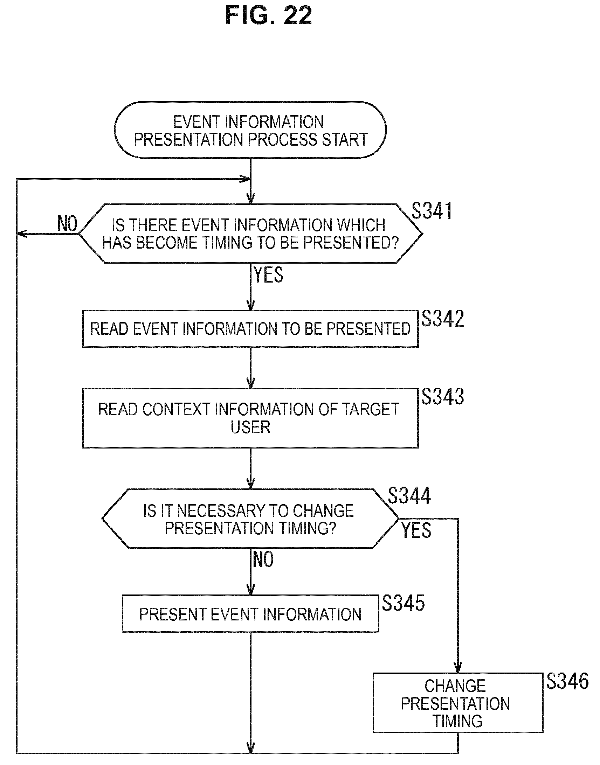

Next, a second embodiment of the present technology will be described by referring to FIG. 18 through to FIG. 22. Note that, this second embodiment can adjust a presentation timing of event information based on a context of a user.

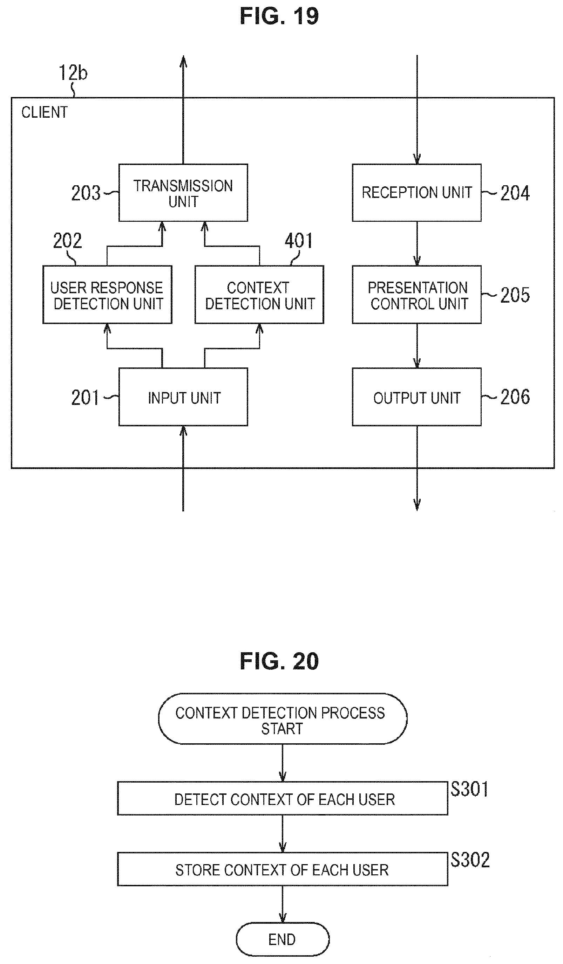

Note that, the configuration of an information processing system in the second embodiment of the present technology is similar to that of the information processing system 1 of FIG. 1 in the first embodiment. However, in the second embodiment, by comparing to the first embodiment, the server 11a constituting the information processing system 1 is replaced by a server 11b of FIG. 18, and the client 12a is replaced by a client 12b of FIG. 19.

[Configuration example of the server 11b]

FIG. 18 is a block diagram which shows a configuration example of the functions of the server 11b. Note that, within the figure, the same reference numerals are attached to portions corresponding to those of FIG. 2, and a description for these portions in which the processes are the same will be arbitrarily omitted as they are repeated.

The server 11b is constituted by including a reception unit 101, a user response detection unit 102, a user response storage unit 103, an event information storage unit 104, a rule setting unit 105, a rule storage unit 106, a presentation information storage unit 108, a presentation control unit 109, a transmission unit 110, a context detection unit 301, a context storage unit 302, and a presentation timing setting unit 303. Compared to the server 11a of FIG. 2, the server 11b is different for the points that the context detection unit 301 and the context storage unit 302 are added, and the presentation timing setting unit 303 is included instead of the presentation timing setting unit 107.

The context detection unit 301 receives context information which shows a context of each user from the client 12b and the server 2, via the network 13 and the reception unit 101. Further, the context detection unit 301 detects a context of each user, based on information received from the client 12b and the server 2, via the network 13 and the reception unit 101. The context detection unit 301 causes the received or detected context information to be stored in the context storage unit 302.

Here, for example, the context is a concept which includes a state of a user, a condition or environment in which the user is placed or the like. Further, not only the present context, but also a future context becomes a detection target. For example, a schedule of a user, the present location, sensor information of various types of sensors (for example, an acceleration sensor, a gyro sensor or the like) or the like is included in a context to be a detection target.

The presentation timing setting unit 303 sets a presentation timing at which event information of each event is to be presented to each user, based on event information stored in the event information storage unit 104 and a presentation model stored in the rule storage unit 106. Further, the presentation timing setting unit 303 adjusts the presentation timing as necessary, based on context information stored in the context storage unit 302. The presentation timing setting unit 303 causes presentation information necessary for a presentation of event information to each user, such as a user to be targeted for presentation, a presentation timing, or contents to be presented, to be stored in the presentation information storage unit 108.

[Configuration example of the client 12b]

FIG. 19 is a block diagram which shows a configuration example of the functions of the client 12b. Note that, within the figure, the same reference numerals are attached to portions corresponding to those of FIG. 3, and a description for these portions in which the processes are the same will be arbitrarily omitted as they are repeated.

The client 12b is constituted by including an input unit 201, a user response detection unit 202, a transmission unit 203, a reception unit 204, a presentation control unit 205, an output unit 206, and a context detection unit 401. Compared to the client 12a of FIG. 3, the client 12b is different for the point that the context detection unit 401 is added.

The context detection unit 401 detects a context of a user, based on information supplied from the input unit 201 or the like. The context detection unit 401 transmits context information which shows a detection result to the server 11b, via the transmission unit 203 and the network 13.

[Second embodiment of the processes of the information processing system 1]

Next, a second embodiment of the processes of the information processing system 1 will be described by referring to FIG. 20 through to FIG. 22.

(Context detection process)

First, a context detection process executed by the server 11b will be described by referring to the flow chart of FIG. 20.

Note that, this process is started, for example, periodically or at the time when context information of a user has been transmitted from the client 12b or the server 2.

In step S301, the context detection unit 301 detects a context of each user.

For example, the context detection unit 401 of the client 12b transmits context information which shows the detected context, periodically or at the time when a context of a user has been detected, to the server 11b via the transmission unit 12b and the network 13.

Further, the server 2 transmits context information which shows a context of each user detected via a service to be provided, for example, to the server 11b via the network 13 at a prescribed timing. For example, a schedule of a user, a usage condition of the service (for example, whether or not the service is being used or the like) or the like is included in the context detected by the server 2.

The context detection unit 301 of the server 11b receives context information from the client 12b or the server 2, via the network 13 and the reception unit 101.

Note that, the context detection unit 301 of the server 11b may actively collect context information of each user from the client 12b and the server 2, periodically or at a prescribed timing, or may detect a context of each user, based on information from the client 12b and the server 2.

In step S302, the server 11b stores a context of each user. Specifically, the context detection unit 301 causes the received or detected context information to be stored in the context storage unit 302 in association with the user to be targeted. At this time, for example, in the case where the context information is sensor information or position information, it may be stored by converting into a more specific context. For example, position information shown by a longitude and latitude may be stored by converting into a specific location. Further, for example, it may be stored by converting into a form such as whether a user is walking or is riding in a vehicle, based on a sensor value of an acceleration sensor or a gyro sensor.

Afterwards, the context detection process ends.

(Presentation timing setting process)

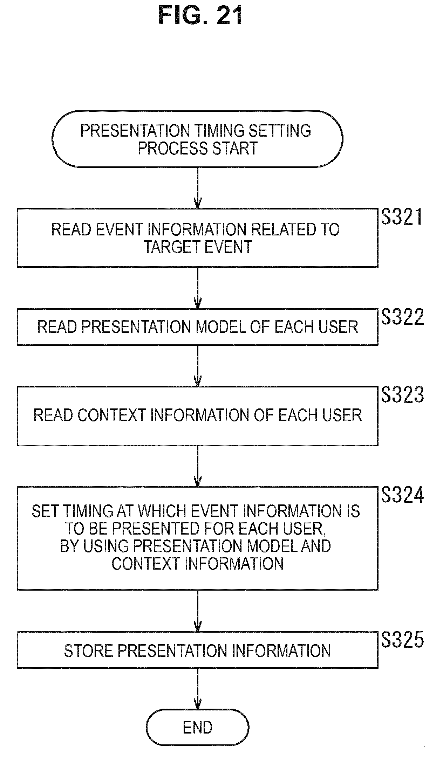

Next, a presentation timing setting process executed by the server 11b will be described by referring to the flow chart of FIG. 21.

Note that, hereinafter, in this process, an event to be targeted for setting a presentation timing will be called a target event.

In step S321, similar to the process of step S1 of FIG. 5, event information related to a target event is read.

In step S322, similar to the process of step S2 of FIG. 5, a presentation model of each user is read.

In step S323, the presentation timing setting unit 303 reads context information of each user from the context storage unit 302. Note that, at this time, the context detection process described above by referring to FIG. 20 may be executed, and a latest context of each user may be detected.

In step S324, the presentation timing setting unit 303 sets a timing at which event information is presented for each user, by using the presentation model and the context information. Specifically, the presentation timing setting unit 303 sets a timing at which event information is presented for each user, by a process similar to that of step S3 of FIG. 5. Also, the presentation timing setting unit 303 adjusts the set presentation timing for each user, based on the context information of each user.

For example, in the case where event information is presented in a context where it is difficult to accept presentation, in accordance with the set presentation timing, the presentation timing setting unit 303 changes the presentation timing. For example, the presentation timing setting unit 303 changes the set presentation timing to a time slot, or close to this time slot, in which it becomes a context where it is easy to accept presentation. Alternatively, for example, the presentation timing setting unit 303 removes the set presentation timing from the time slot, or far from this time slot, in which it becomes a context where it is difficult to accept presentation.

Here, a context where it is easy to accept presentation is a context that has a high possibility of a user responding for presented event information, and hereinafter, will be called a receptive context. For example, a context such as at the time when boarding a vehicle such as a train or bus, taking a rest, returning home, free time by canceling a reservation, waiting time, leisure time, a pay day or a bonus day can be considered to correspond to a receptive context.

On the other hand, a context where it is difficult to accept presentation is a context that has a low possibility of a user responding for presented event information, and hereinafter, will be called a non-receptive context. For example, a context such as during work, during a meeting, during study, while driving, during participation in an event, at a busy time or before a pay day can be considered to correspond to a non-receptive context.

In step S325, similar to the process of step S4 of FIG. 5, presentation information is stored.

Afterwards, the presentation timing setting process ends.

(Event information presentation process)

Next, an event information presentation process executed by the server 11b will be described by referring to the flow chart of FIG. 22.

In step S341, similar to the process of step S21 of FIG. 6, it is determined whether or not there is event information which has become a timing to be presented. This process is periodically repeated, for example, up until when it is determined that there is event information which has become a timing to be presented, and in the case where it is determined that there is event information which has become a timing to be presented, the process proceeds to step S342.

In step S342, similar to the process of step S22 of FIG. 6, the event information to be presented is read.

In step S343, the presentation control unit 109 reads context information of a target user from the context storage unit 302. Note that, at this time, the context detection process described above by referring to FIG. 20 may be executed for the target user, and a latest context of the target user may be detected.

In step S344, the presentation control unit 109 determines whether or not it may be necessary to change the presentation timing. For example, in the case where the present context of the target user is not a non-receptive context, the presentation control unit 109 determines that it may not be necessary to change the presentation timing, and the process proceeds to step S345.

In step S345, similar to the process of step S23 of FIG. 6, the event information is presented to the target user.

Afterwards, the process returns to step S341, and the processes from step S341 onwards are executed.

On the other hand, in step S344, in the case where the present context of the target user is a non-receptive context, the presentation control unit 109 determines that it may be necessary to change the presentation timing, and the process proceeds to step S346.

In step S346, the presentation timing setting unit 303 changes the presentation timing. Specifically, the presentation control unit 109 instructs a change of the presentation timing to the presentation timing setting unit 303. The presentation timing setting unit 303 recalculates a presentation timing to the target user of event information related to a target event, and causes the presentation timing after being changed to be stored in the presentation information storage unit 108. In this way, for example, the presentation timing is changed to after the present time slot in which the non-receptive context continues.

Afterwards, the process returns to step S341, and the processes from step S341 onwards are executed.

In this way, the event information is presented in a context where it is easy for each user to accept presentation of the event information, and the event information is prevented from being presented in a context where it is difficult to accept presentation. As a result of this, for example, the purchasing rate of tickets for the presented event information, and the participation rate of an event of each user, can be improved.

Note that, for example, the setting or changing of the presentation timing may be performed based on a context of a user, by only one of the presentation timing setting process of FIG. 21 and the event information presentation process of FIG. 22.

<Modified examples>

Hereinafter, modified examples of the above described embodiment of the present technology will be described.

[Modified example 1: Modified example related to a learning method of a presentation model]

It is assumed that there will be cases where the opportunity to participate in an event is low, in accordance with a user, and a long time may be necessary up until data necessary for learning a presentation model is sufficiently accumulated. Accordingly, in order to be able to learn a presentation model more quickly, for example, learning data may be shared between a plurality of users with similar actions, preferences or the like.

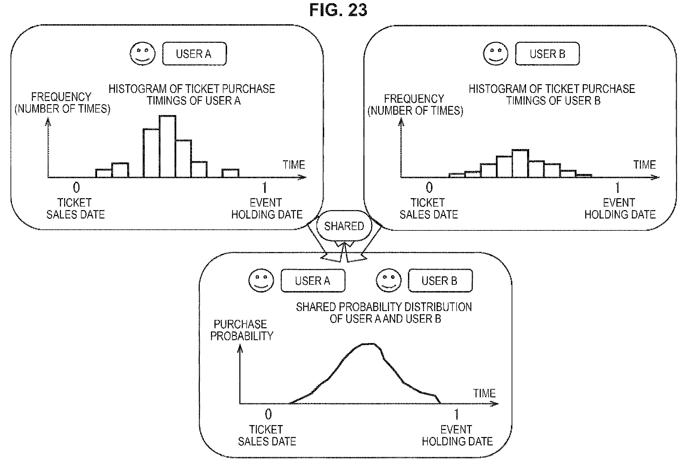

For example, as shown in FIG. 23, a similarity determination of the histograms of purchase timings of tickets for each user may be performed, similar histograms may be collected into one, and a presentation model may be created, based on the obtained histogram. More specifically, in this example, the histograms of a user A and a user B who are mutually similar are collected into one. That is, the user A and the user B are users with a similar intention decision timing. Also, an example is shown in which a shared probability distribution of the purchase timings of tickets for the user A and the user B is obtained, based on the obtained histogram, and is set to a presentation model.

In this way, a presentation model of users with similar behavioral characteristics for an event, and more specifically, a time tendency of an intention decision of participation in an event, is shared, and a presentation model can be created more quickly.

Further, for example, all event information may be presented at a same timing for a user prior to the creation of a presentation model, or event information may be presented at different timings for each user or each event by a prescribed condition. In the case of the latter, for example, it can be considered that information related to attributes, preferences or the like of a user is acquired beforehand by a questionnaire or the like, the user is classified into a plurality of groups based on the acquired information, and a presentation timing is set for each group to which the user belongs. Alternatively, in the case of the former, it can be considered that an event is classified into a plurality of groups such as described above, and a presentation timing is set for each group to which the event belongs.

Further, event information may be presented while shifting a presentation timing for each event, so as to be able to quickly accumulate effective learning data. That is, event information may be presented at a different timing for each event, up until a presentation model is created, and an appropriate presentation timing may be able to be quickly learnt (detected), by detecting a response of a user.

Further, for example, a user response may be detected, and learning of a presentation model may be performed, based on only information from the client 12, without using information from the server 2. In addition, for example, learning of a presentation model may be performed based on only a direct response, without performing the above described detection of an indirect response.

[Modified example 2: Modified example related to a presentation rule]

In the above described description, while an example has been shown which creates a presentation model for each group, by separating an event into a plurality of groups, a different presentation rule may be set for each group, from among presentation rules prepared in advance.

Similarly, for example, a different presentation rule may be set in the cases where a user has not acknowledged or has acknowledged an event beforehand, or a different presentation rule may be set for each method acknowledging an event, from among presentation rules prepared in advance.

[Modified example 3: Modified example related to a presentation timing]

In the above described description, while an example has been shown which controls a presentation timing based on a presentation rule (presentation model), for example, the frequency at which event information is presented may be controlled based on a presentation rule. For example, in the case where the above described presentation model of the lower figure of FIG. 8 is set to a presentation rule, a presentation frequency may be made a maximum in the vicinity of the peak of the presentation model, and afterwards the presentation frequency may be changed in accordance with the value of the presentation model.

Further, for example, the presentation timing may be changed, based on the remaining number of the seating capacity, for an event in which the seating capacity is determined. For example, event information may be presented, at the time when the remaining number of the seating capacity has become less than a prescribed threshold, even for users who have not reached the presentation timing. In this way, it becomes possible to provide the opportunity to surely decide a participation intention for a user, prior to reaching the seating capacity.

[Modified example 4: Modified example of an allotment of processes]

The above described allotment of the processes of the above described server 11 (the server 11a or the server 11b) and the client 12 (the client 12a or the client 12b) is an example of this, and it is possible to be arbitrarily changed. For example, it is possible for a part of the functions of the server 11 to be transferred to the client 12, or a part of the functions of the client 12 to be transferred to the server 11.

For example, it is possible for the functions of the user response detection unit 102 of the server 11a or the server 11b, and the user response detection unit 202 of the client 12a or the client 12b, to be consolidated into either one. Further, for example, it is possible for the functions of the context detection unit 301 of the server 11b, or the context detection unit 401 of the client 12b, to be consolidated into either one.

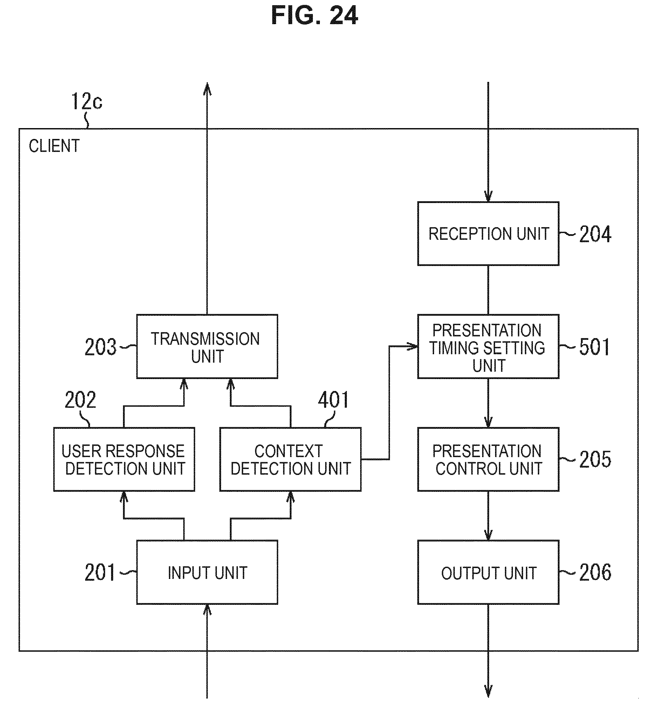

Further, for example, the functions of the presentation timing setting unit may be included in the client 12, such as shown in FIG. 24.

Specifically, FIG. 24 shows a configuration example of the functions of the client 12c. Note that, within the figure, the same reference numerals are attached to portions corresponding to those of FIG. 19, and a description for these portions in which the processes are the same will be arbitrarily omitted as they are repeated.

The client 12c is constituted by including an input unit 201, a user response detection unit 202, a transmission unit 203, a reception unit 204, a presentation control unit 205, an output unit 206, a context detection unit 401, and a presentation timing setting unit 501. Compared to the client 12b of FIG. 19, the client 12c is different for the point that the presentation timing setting unit 501 is added.

The presentation timing setting unit 501 receives, from the server 11, a presentation rule of a target user using the client 12c, and event information capable of being presented to the target user, via the network 13 and the reception unit 204. Also, similar to the above described presentation timing setting unit 303 of the server 11b, the presentation timing setting unit 501 sets a presentation timing of each event information, based on the presentation rule of the target user. Further, it is possible for the presentation timing setting unit 501 to adjust the set presentation timing, based on a context of the target user detected by the context detection unit 401. Also, the presentation timing setting unit 501 supplies information which shows the event information and the set presentation timing to the presentation control unit 205.

The presentation control unit 205 controls the output unit 206, so as to present each event information at the presentation timing set by the presentation timing setting unit 501.

In this way, event information to be presented at the client 12c side can be selected, and the presentation timing can be controlled. Therefore, for example, the event information to be presented and the presentation timing can be customized in accordance with a preference of a user. Further, the load of the processes of the server 11 can be reduced.

[Computer Configuration Example]

The series of processes described above can be executed by hardware but can also be executed by software. When the series of processes is executed by software, a program that constructs such software is installed into a computer. Here, the expression "computer" includes a computer in which dedicated hardware is incorporated and a general-purpose personal computer or the like that is capable of executing various functions when various programs are installed.

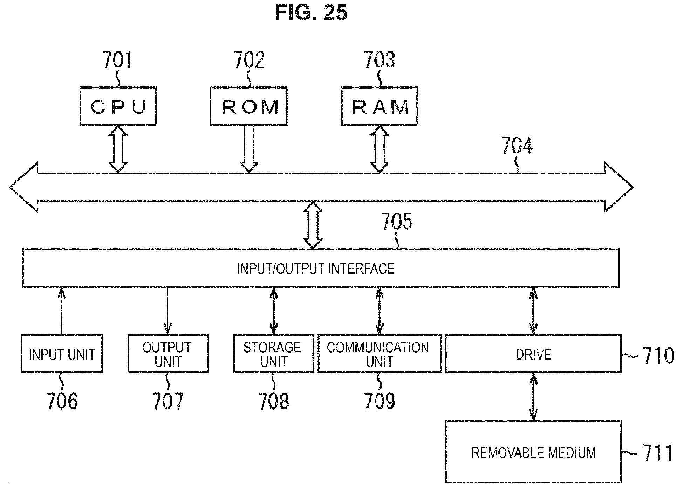

FIG. 25 is a block diagram showing an example configuration of the hardware of a computer that executes the series of processes described earlier according to a program.

In a computer, a CPU (Central Processing Unit) 701, a ROM (Read Only Memory) 702, and a RAM (Random Access Memory) 703 are mutually connected by a bus 704.

An input/output interface 705 is also connected to the bus 704. An input unit 706, an output unit 707, a storage unit 708, a communication unit 709, and a drive 710 are connected to the input/output interface 705.

The input unit 706 is configured from a keyboard, a mouse, a microphone or the like. The output unit 707 configured from a display, a speaker or the like. The storage unit 708 is configured from a hard disk, a non-volatile memory or the like. The communication unit 709 is configured from a network interface or the like. The drive 710 drives a removable medium 711 such as a magnetic disk, an optical disk, a magneto-optical disk, a semiconductor memory or the like.

In the computer configured as described above, as one example the CPU 701 loads a program stored in the storage unit 708 via the input/output interface 705 and the bus 704 into the RAM 703 and executes the program to carry out the series of processes described earlier.

As one example, the program executed by the computer (the CPU 701) may be provided by being recorded on the removable medium 711 as a packaged medium or the like. The program can also be provided via a wired or wireless transfer medium, such as a local area network, the Internet, or a digital satellite broadcast.

In the computer, by loading the removable medium 711 into the drive 710, the program can be installed into the storage unit 708 via the input/output interface 705. It is also possible to receive the program from a wired or wireless transfer medium using the communication unit 709 and install the program into the storage unit 708. As another alternative, the program can be installed in advance into the ROM 702 or the storage unit 708.

Note that the program executed by the computer may be a program in which processes are carried out in a time series in the order described in this specification or may be a program in which processes are carried out in parallel or at necessary timing, such as when the processes are called.

Further, in the present technology, a system has the meaning of a set of a plurality of configured elements (such as an apparatus or a module (part)), and does not take into account whether or not all the configured elements are in the same casing. Therefore, the system may be either a plurality of apparatuses, stored in separate casings and connected through a network, or a plurality of modules within a single casing.

An embodiment of the disclosure is not limited to the embodiments described above, and various changes and modifications may be made without departing from the scope of the disclosure.

For example, the present technology can adopt a configuration of cloud computing which processes by allocating and connecting one function by a plurality of apparatuses through a network.

Further, each step described by the above mentioned flow charts can be executed by one apparatus or by allocating a plurality of apparatuses.

In addition, in the case where a plurality of processes is included in one step, the plurality of processes included in this one step can be executed by one apparatus or by allocating a plurality of apparatuses.

Additionally, the present technology may also be configured as below.

(1) An information processing apparatus including:

a rule setting unit which sets a rule for setting a presentation timing for presenting event information related to each event for each user;
a presentation timing setting unit which sets the presentation timing of the event information for each user based on the set rule; and
a presentation control unit which performs a control in a manner that the event information is presented to each user at the set presentation timing.

(2) The information processing apparatus according to (1),
wherein the rule is a predetermined rule, or is a rule created by the rule setting unit through learning an intention decision timing at which an intention of participation in an event of each user is decided.
(3) The information processing apparatus according to (2),
wherein the rule setting unit creates the rule through learning a relationship between the presentation timing and the intention decision timing of each user.
(4) The information processing apparatus according to (2) or (3),
wherein the rule setting unit creates the rule through learning a probability model of the intention decision timing.
(5) The information processing apparatus according to any one of (4),
wherein the presentation timing setting unit sets a presentation frequency of the event information for each user based on a number of peaks of the probability model.
(6) The information processing apparatus according to any one of (2) to (5),
wherein the rule setting unit collects learning data of a plurality of users with a similar tendency of the intention decision timing, and learns the intention decision timing of the plurality of users.
(7) The information processing apparatus according to any one of (2) to (6), further including:

a user response detection unit which detects at least one or more of a timing at which an event is acknowledged, a timing at which an intention of participation in an event is decided, and participation in an event, as a response for each event of each user,
wherein the rule setting unit learns the intention decision timing based on a detection result of a response for each event of each user.

(8) The information processing apparatus according to any one of (1) to (7),
wherein, in a case where there has been a request of a presentation of the event information from a user, the presentation timing setting unit sets the presentation timing of the event information of each event for the user, and wherein the presentation control unit performs a control in a manner that the event information is presented to the user with the set presentation timing within a prescribed range from a present date.
(9) The information processing apparatus according to any one of (1) to (8),
wherein the rule setting unit classifies events into a plurality of groups, and sets the rule for each of the groups, and wherein the presentation timing setting unit sets the presentation timing of the event information of an event to be targeted for each user based on the rule for a group to which the event to be targeted belongs.
(10) The information processing apparatus according to (9),
wherein the rule setting unit classifies events into a plurality of the groups for each user based on a preference degree of each user for an event.
(11) The information processing apparatus according to any one of (1) to (10), further including:

a context detection unit which detects a context of each user,
wherein the presentation timing setting unit adjusts the presentation timing for each user based on the detected context of each user.

(12) The information processing apparatus according to any one of (1) to (11),
wherein the rule setting unit sets the rule different for cases where a user has not acknowledged and has acknowledged a corresponding event prior to presenting the event information, and
wherein the presentation timing setting unit sets the presentation timing based on the rule different in an event not acknowledged and an event acknowledged by a user.
(13) The information processing apparatus according to any one of (1) to (12),
wherein the rule setting unit additionally sets the rule for each method acknowledging a corresponding event prior to presenting the event information, and
wherein, in a case where a user acknowledges a corresponding event prior to presenting the event information, the presentation timing setting unit sets the presentation timing based on the rule corresponding to a method acknowledging the event.
(14) The information processing apparatus according to any one of (1) to (13),

wherein the presentation timing setting unit changes a presentation timing of the event information based on a remaining number of a seating capacity of an event.

(15) The information processing apparatus according to any one of (1) to (14),
wherein the presentation timing setting unit sets the presentation timing on the basis of at least one or more of a timing at which a time period capable of deciding an intention of participation in an event is started, a timing at which the time period is ended, and a timing at which the event is held.

(16) The information processing apparatus according to any one of (1) to (15),
wherein the presentation control unit performs a control in a manner that the event information is presented in another information processing apparatus used by each user.

(17) An information processing method executed by an information processing apparatus which controls a presentation to a user of event information related to each event, the information processing method including the steps of:

setting a rule for setting a presentation timing for presenting the event information for each user;
setting a presentation timing for presenting the event information for each user based on the set rule; and
performing a control in a manner that the event information is presented to each user at the set presentation timing.

(18) A program for causing a computer to execute a process including the steps of:

setting a rule in order for setting a presentation timing for presenting event information related to each event for each user;
setting a presentation timing for presenting event information related to each event for each user based on the set rule; and
performing a control in a manner that the event information is presented to each user at the set presentation timing.

(19) An information processing apparatus including:

a reception unit which receives a rule for setting a presentation timing for presenting event information related to each event to a user, and the event information, from another information processing apparatus;
a presentation timing setting unit which sets a presentation timing for presenting the received event information based on the received rule; and
a presentation control unit which performs a control in a manner that the event information is presented at the set presentation timing.

(20) The information processing apparatus according to (19), further including:

a user response detection unit which detects a response of the user for each event; and
a transmission unit which transmits user response information to the another information processing apparatus, the user response information being information which shows a detected response of the user and being information used for a creation of the rule.

Reference Signs List

| | |
|---|---|
| 1 | information processing system |
| 2, 11, 11a, 11b | server |
| 12-1 through 12-m, 12a through 12c | client |
| 13 | network |
| 102 | user response detection unit |
| 104 | event information storage unit |
| 105 | rule setting unit |
| 107 | presentation timing setting unit |
| 109 | presentation control unit |
| 201 | input unit |
| 202 | user response detection unit |
| 203 | transmission unit |

| 204 | reception unit |
| 205 | presentation control unit |
| 206 | output unit |
| 301 | context detection unit |
| 303 | presentation timing setting unit |
| 401 | context detection unit |
| 501 | presentation timing setting unit |

**Claims**

1. An information processing apparatus comprising:

   a rule setting unit which sets a rule for setting a presentation timing for presenting event information related to each event for each user;
   a presentation timing setting unit which sets the presentation timing of the event information for each user based on the set rule; and
   a presentation control unit which performs a control in a manner that the event information is presented to each user at the set presentation timing.

2. The information processing apparatus according to claim 1,
   wherein the rule is a predetermined rule, or is a rule created by the rule setting unit through learning an intention decision timing at which an intention of participation in an event of each user is decided.

3. The information processing apparatus according to claim 2,
   wherein the rule setting unit creates the rule through learning a relationship between the presentation timing and the intention decision timing of each user.

4. The information processing apparatus according to claim 2,
   wherein the rule setting unit creates the rule through learning a probability model of the intention decision timing.

5. The information processing apparatus according to claim 4,
   wherein the presentation timing setting unit sets a presentation frequency of the event information for each user based on a number of peaks of the probability model.

6. The information processing apparatus according to claim 2,
   wherein the rule setting unit collects learning data of a plurality of users with a similar tendency of the intention decision timing, and learns the intention decision timing of the plurality of users.

7. The information processing apparatus according to claim 2, further comprising:

   a user response detection unit which detects at least one or more of a timing at which an event is acknowledged, a timing at which an intention of participation in an event is decided, and participation in an event, as a response for each event of each user,
   wherein the rule setting unit learns the intention decision timing based on a detection result of a response for each event of each user.

8. The information processing apparatus according to claim 1,
   wherein, in a case where there has been a request of a presentation of the event information from a user, the presentation timing setting unit sets the presentation timing of the event information of each event for the user, and wherein the presentation control unit performs a control in a manner that the event information is presented to the user with the set presentation timing within a prescribed range from a present date.

9. The information processing apparatus according to claim 1,
   wherein the rule setting unit classifies events into a plurality of groups, and sets the rule for each of the groups, and wherein the presentation timing setting unit sets the presentation timing of the event information of an event to be targeted for each user based on the rule for a group to which the event to be targeted belongs.

**10.** The information processing apparatus according to claim 9,
wherein the rule setting unit classifies events into a plurality of the groups for each user based on a preference degree of each user for an event.

**11.** The information processing apparatus according to claim 1, further comprising:

a context detection unit which detects a context of each user,
wherein the presentation timing setting unit adjusts the presentation timing for each user based on the detected context of each user.

**12.** The information processing apparatus according to claim 1,
wherein the rule setting unit sets the rule different for cases where a user has not acknowledged and has acknowledged a corresponding event prior to presenting the event information, and
wherein the presentation timing setting unit sets the presentation timing based on the rule different in an event not acknowledged and an event acknowledged by a user.

**13.** The information processing apparatus according to claim 12,
wherein the rule setting unit additionally sets the rule for each method acknowledging a corresponding event prior to presenting the event information, and
wherein, in a case where a user acknowledges a corresponding event prior to presenting the event information, the presentation timing setting unit sets the presentation timing based on the rule corresponding to a method acknowledging the event.

**14.** The information processing apparatus according to claim 1,
wherein the presentation timing setting unit changes a presentation timing of the event information based on a remaining number of a seating capacity of an event.

**15.** The information processing apparatus according to claim 1,
wherein the presentation timing setting unit sets the presentation timing on the basis of at least one or more of a timing at which a time period capable of deciding an intention of participation in an event is started, a timing at which the time period is ended, and a timing at which the event is held.

**16.** The information processing apparatus according to claim 1,
wherein the presentation control unit performs a control in a manner that the event information is presented in another information processing apparatus used by each user.

**17.** An information processing method executed by an information processing apparatus which controls a presentation to a user of event information related to each event, the information processing method comprising the steps of:

setting a rule for setting a presentation timing for presenting the event information for each user;
setting a presentation timing for presenting the event information for each user based on the set rule; and
performing a control in a manner that the event information is presented to each user at the set presentation timing.

**18.** A program for causing a computer to execute a process including the steps of:

setting a rule in order for setting a presentation timing for presenting event information related to each event for each user;
setting a presentation timing for presenting event information related to each event for each user based on the set rule; and
performing a control in a manner that the event information is presented to each user at the set presentation timing.

**19.** An information processing apparatus comprising:

a reception unit which receives a rule for setting a presentation timing for presenting event information related to each event to a user, and the event information, from another information processing apparatus;
a presentation timing setting unit which sets a presentation timing for presenting the received event information based on the received rule; and
a presentation control unit which performs a control in a manner that the event information is presented at the set presentation timing.

20. The information processing apparatus according to claim 19, further comprising:

a user response detection unit which detects a response of the user for each event; and
a transmission unit which transmits user response information to the another information processing apparatus, the user response information being information which shows a detected response of the user and being information used for a creation of the rule.

# FIG. 1

1

INFORMATION PROCESSING SYSTEM

11

SERVER

2

SERVER

13

CLIENT  . . .  CLIENT

12−1    12−m

## FIG. 2

# FIG. 3

## FIG. 4

INFORMATION PRESENTATION

a     b     X     c        d        e   f

EVENT INFORMATION DISCLOSURE        EVENT EXECUTION

INTENTION DECIDABLE TIME PERIOD

USER PROCESS

INFORMATION ACKNOWLEDGEMENT    INTENTION DECISION    PARTICIPATE/ PERFORM

# FIG. 5

```
┌─────────────────────────────┐
│  PRESENTATION TIMING SETTING │
│       PROCESS START          │
└─────────────────────────────┘
              │
              ▼
┌─────────────────────────────┐
│  READ EVENT INFORMATION RELATED TO │ S1
│         TARGET EVENT         │
└─────────────────────────────┘
              │
              ▼
┌─────────────────────────────┐
│ READ PRESENTATION MODEL OF EACH USER │ S2
└─────────────────────────────┘
              │
              ▼
┌─────────────────────────────┐
│ SET TIMING AT WHICH EVENT INFORMATION IS │ S3
│ TO BE PRESENTED FOR EACH USER, BY USING │
│  PRESENTATION MODEL OF EACH USER │
└─────────────────────────────┘
              │
              ▼
┌─────────────────────────────┐
│  STORE PRESENTATION INFORMATION │ S4
└─────────────────────────────┘
              │
              ▼
          ┌───────┐
          │  END  │
          └───────┘
```

# FIG. 6

```
┌─────────────────────────────┐
│  EVENT INFORMATION PRESENTATION │
│       PROCESS START          │
└─────────────────────────────┘
              │
              ▼
        ┌───────────────────────────────┐
   NO   │ IS THERE EVENT INFORMATION AT TIMING │ S21
 ◄──────│      TO BE PRESENTED?         │
        └───────────────────────────────┘
              │ YES
              ▼
┌─────────────────────────────┐
│ READ EVENT INFORMATION TO BE PRESENTED │ S22
└─────────────────────────────┘
              │
              ▼
┌─────────────────────────────┐
│   PRESENT EVENT INFORMATION  │ S23
└─────────────────────────────┘
```

31

# FIG. 7

```
                    ┌─────────────────────┐
                    │      LEARNING       │
                    │  PROCESS START      │
                    └─────────────────────┘
                               │
        ┌──────────────────────┼
        │                      ▼
        │          ╱──────────────────────────╲  S41
    NO  │◄────────┤  HAS RESPONSE OF USER FOR EVENT │
        │          ╲    BEEN DETECTED?        ╱
        │              └──────────┬───────────┘
        │                      YES│
        │                         ▼
        │          ┌──────────────────────────────────┐  S42
        │          │ STORE DETECTION RESULT OF USER RESPONSE │
        │          └──────────────────┬─────────────────┘
        │                             │
        │                             ▼
        │          ╱───────────────────────────────╲  S43
    NO  │◄────────┤  HAS LEARNING DATA OF TARGET USER │
        │          ╲ BEEN SUFFICIENTLY ACCUMULATED?  ╱
        │              └───────────────┬────────────┘
        │                           YES│
        │                              ▼
        │          ┌────────────────────────────────────┐  S44
        │          │  LEARN PRESENTATION MODEL FOR TARGET USER │
        │          └──────────────────┬─────────────────┘
        │                             │
        │                             ▼
        │          ┌────────────────────────────────────┐  S45
        │          │   STORE LEARNT PRESENTATION MODEL   │
        │          └──────────────────┬─────────────────┘
        │                             │
        └─────────────────────────────┘
```

# FIG. 8

FREQUENCY
(NUMBER OF TIMES)

HISTOGRAM OF TICKET PURCHASE TIMINGS

TIME

0
TICKET SALES DATE

1
EVENT HOLDING DATE

PURCHASE
PROBABILITY

PROBABILITY DISTRIBUTION OF
TICKET PURCHASE TIMINGS

TIME

0
TICKET SALES DATE

1
EVENT HOLDING DATE

## FIG. 9

ADVANCE
PURCHASE GROUP

TICKET SALES DATE

EVENT HOLDING DATE

TIME

PURCHASE-IMMEDIATELY-
BEFORE-EVENT GROUP

TICKET SALES DATE

EVENT HOLDING DATE

TIME

**FIG. 10**

FIG. 11

EVENT WITH HIGH PREFERENCE MATCHING DEGREE

TICKET SALES DATE

EVENT HOLDING DATE

TIME

EVENT WITH SOMEWHAT LOW PREFERENCE MATCHING DEGREE

TICKET SALES DATE

EVENT HOLDING DATE

TIME

# FIG. 12

# FIG. 13

Y
TICKET PURCHASE
TIMING

EVENT HOLDING DATE 1

PROJECTION

X
EVENT
INFORMATION
PRESENTATION
TIMING

−x                    0                    1

EVENT INFORMATION      TICKET              EVENT
DISCLOSURE DATE        SALES DATE          HOLDING DATE

Z
TICKET PURCHASE
RATE

X
EVENT
INFORMATION
PRESENTATION
TIMING

−x                    0                    1

EVENT INFORMATION      TICKET              EVENT
DISCLOSURE DATE        SALES DATE          HOLDING DATE

# FIG. 14

Z
TICKET
PURCHASE RATE

PEAK VALUE

X
EVENT
INFORMATION
PRESENTATION
TIMING

−x

0

1

EVENT INFORMATION
DISCLOSURE DATE

TICKET
SALES DATE

EVENT
HOLDING DATE

OPTIMAL PRESENTATION TIMING

# FIG. 15

ERROR

ERROR

$f-X$

$f-d$

# FIG. 16

```
┌─────────────────────────────────────┐
│  PRESENTATION TIMING SETTING         │
│       PROCESS START                  │
└─────────────────────────────────────┘
                  │
                  ▼
┌─────────────────────────────────────┐ S101
│   READ EVENT INFORMATION RELATED TO  │
│          TARGET EVENT                │
└─────────────────────────────────────┘
                  │
                  ▼
┌─────────────────────────────────────┐ S102
│ READ USER RESPONSE INFORMATION OF    │
│   EACH USER FOR TARGET EVENT         │
└─────────────────────────────────────┘
                  │
                  ▼
┌─────────────────────────────────────┐ S103
│ SELECT AND READ PRESENTATION MODEL   │
│ USED FOR EACH USER, BASED ON WHETHER │
│ OR NOT EACH USER HAS ACKNOWLEDGED    │
│          TARGET EVENT                │
└─────────────────────────────────────┘
                  │
                  ▼
┌─────────────────────────────────────┐ S104
│ SET TIMING AT WHICH EVENT INFORMATION│
│   IS PRESENTED FOR EACH USER, BY     │
│ USING PRESENTATION MODEL OF EACH USER│
└─────────────────────────────────────┘
                  │
                  ▼
┌─────────────────────────────────────┐ S105
│    STORE PRESENTATION INFORMATION    │
└─────────────────────────────────────┘
                  │
                  ▼
              ┌────────┐
              │  END   │
              └────────┘
```

# FIG. 17

EVENT INFORMATION PRESENTATION PROCESS (Pull-TYPE) START

EXTRACT EVENT TO BE PRESENTED TO TARGET USER — S201

IS THERE EVENT TO BE PRESENTED TO TARGET USER? — S202 / NO

YES

READ PRESENTATION MODEL OF TARGET USER — S203

SELECT ONE UNPROCESSED EVENT FROM AMONG EXTRACTED EVENTS, AND READ EVENT INFORMATION OF SELECTED EVENT — S204

SET PRESENTATION TIMING OF EVENT INFORMATION OF SELECTED EVENT, BY USING PRESENTATION MODEL OF TARGET USER — S205

IS PRESENT APPROPRIATE AS PRESENTATION TIMING? — S206 / NO

YES

SET SELECTED EVENT TO EVENT TO BE PRESENTED TO TARGET USER — S207

NO — HAVE ALL EXTRACTED EVENTS BEEN PROCESSED? — S208

YES

PRESENT SELECTED EVENT INFORMATION TO CLIENT OF TARGET USER — S209

DETECT RESPONSE OF TARGET USER FOR PRESENTED EVENT INFORMATION — S210

STORE DETECTION RESULT OF USER RESPONSE — S211

HAS LEARNING DATA OF TARGET USER BEEN SUFFICIENTLY ACCUMULATED? — S212 / NO

YES

LEARN PRESENTATION MODEL FOR TARGET USER — S213

STORE LEARNT PRESENTATION MODEL — S214

END

FIG. 18

11b

SERVER

105

RULE SETTING
UNIT

103 — USER RESPONSE
STORAGE UNIT

104 — EVENT
INFORMATION
STORAGE UNIT

106 — RULE STORAGE
UNIT

PRESENTATION
INFORMATION
STORAGE UNIT — 108

102 — USER RESPONSE
DETECTION UNIT

PRESENTATION
TIMING SETTING
UNIT

PRESENTATION
CONTROL UNIT — 109

303

101 — RECEPTION UNIT

CONTEXT
DETECTION UNIT

CONTEXT
STORAGE UNIT

TRANSMISSION
UNIT — 110

301

302

# FIG. 19

12b

CLIENT

203 — TRANSMISSION UNIT

RECEPTION UNIT — 204

202

USER RESPONSE DETECTION UNIT

401

CONTEXT DETECTION UNIT

PRESENTATION CONTROL UNIT — 205

201 — INPUT UNIT

OUTPUT UNIT — 206

# FIG. 20

CONTEXT DETECTION PROCESS START

DETECT CONTEXT OF EACH USER    S301

STORE CONTEXT OF EACH USER    S302

END

# FIG. 21

```
        ┌────────────────────────────┐
        │ PRESENTATION TIMING SETTING │
        │      PROCESS START          │
        └────────────────────────────┘
                      │
                      ▼
    ┌──────────────────────────────────┐  S321
    │ READ EVENT INFORMATION RELATED TO │
    │          TARGET EVENT             │
    └──────────────────────────────────┘
                      │
                      ▼
    ┌──────────────────────────────────┐  S322
    │ READ PRESENTATION MODEL OF EACH USER │
    └──────────────────────────────────┘
                      │
                      ▼
    ┌──────────────────────────────────┐  S323
    │ READ CONTEXT INFORMATION OF EACH USER │
    └──────────────────────────────────┘
                      │
                      ▼
    ┌──────────────────────────────────┐  S324
    │ SET TIMING AT WHICH EVENT INFORMATION IS │
    │  TO BE PRESENTED FOR EACH USER,   │
    │  BY USING PRESENTATION MODEL AND  │
    │        CONTEXT INFORMATION        │
    └──────────────────────────────────┘
                      │
                      ▼
    ┌──────────────────────────────────┐  S325
    │   STORE PRESENTATION INFORMATION  │
    └──────────────────────────────────┘
                      │
                      ▼
                 ┌─────────┐
                 │   END   │
                 └─────────┘
```

44

# FIG. 22

```
        ┌─────────────────────────────┐
        │    EVENT INFORMATION        │
        │ PRESENTATION PROCESS START  │
        └─────────────────────────────┘
                       │
                       ▼
                                                    S341
    NO   ╱ IS THERE EVENT INFORMATION WHICH ╲
    ◄────  HAS BECOME TIMING TO BE PRESENTED?
         ╲                                   ╱
                       │
                      YES
                       ▼
        ┌─────────────────────────────┐  S342
        │ READ EVENT INFORMATION TO BE PRESENTED │
        └─────────────────────────────┘
                       │
                       ▼
        ┌─────────────────────────────┐  S343
        │ READ CONTEXT INFORMATION OF TARGET │
        │             USER            │
        └─────────────────────────────┘
                       │
                       ▼
                                            S344
         ╱ IS IT NECESSARY TO CHANGE ╲
         ╲  PRESENTATION TIMING?     ╱ YES
                       │                │
                      NO                │
                       ▼                │
        ┌─────────────────────┐ S345    │
        │ PRESENT EVENT INFORMATION │   │
        └─────────────────────┘        │
                       │                ▼
                       │     ┌─────────────────┐ S346
                       │     │     CHANGE      │
                       │     │  PRESENTATION   │
                       │     │     TIMING      │
                       │     └─────────────────┘
                       ▼                │
```

## FIG. 23

# FIG. 24

# FIG. 25

## INTERNATIONAL SEARCH REPORT

| International application No. |
| --- |
| PCT/JP2014/060265 |

**A. CLASSIFICATION OF SUBJECT MATTER**
*G06Q30/02*(2012.01)i, *G06F17/30*(2006.01)i

According to International Patent Classification (IPC) or to both national classification and IPC

**B. FIELDS SEARCHED**

Minimum documentation searched (classification system followed by classification symbols)
G06Q30/02, G06F17/30

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | JP 2010-231817 A (Takafumi TERASAWA),<br>14 October 2010 (14.10.2010),<br>paragraphs [0288] to [0306]<br>& US 2006/0252016 A1 & EP 1628253 A1<br>& WO 2004/100035 A1 & CN 1784693 A | 1-4,6-11,<br>14-20<br>5,12-13 |
| Y<br>A | JP 2010-122738 A (NTT Docomo Inc.),<br>03 June 2010 (03.06.2010),<br>paragraphs [0005], [0018]<br>(Family: none) | 1-4,6-11,<br>14-20<br>5,12-13 |
| Y | Toyohisa NAKADA et al., "Book Browsing in the Real World using Probabilistic Inference",<br>2006 Nendo Annual Conference of JSAI (Dai 20 Kai) Ronbunshu [CD-ROM], 13 February 2008 (13. 02.2008) (received date), pages 1 to 4 | 4 |

☒ Further documents are listed in the continuation of Box C.　　☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>25 April, 2014 (25.04.14) | Date of mailing of the international search report<br>13 May, 2014 (13.05.14) |
| --- | --- |
| Name and mailing address of the ISA/<br>　　Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/060265

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-320227 A (Toshiba Corp.), 11 November 2004 (11.11.2004), paragraphs [0025] to [0027], [0187] (Family: none) | 9-10 |
| Y | JP 2005-32167 A (Sony Corp.), 03 February 2005 (03.02.2005), paragraph [0126] (Family: none) | 14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005267483 A

- JP 2009071499 A